# EUROPEAN PATENT SPECIFICATION

(11) **EP 4 377 368 B1**
(45) Date of publication and mention of the grant of the patent: **18.06.2025**
(21) Application number: 22753671.1
(22) Date of filing: 19.07.2022
(51) Int. Cl.: C08G 18/08, C08G 18/42, C08G 18/32, C08G 18/34, C08G 18/76, C08G 18/73, B05D 7/00, C08G 18/10, C08G 18/66, C08G 18/79, C09D 175/06, C09D 175/12, B05D 1/02, B05D 3/02

(54) **AQUEOUS POLYURETHANE DISPERSION**
WÄSSRIGE POLYURETHANDISPERSION
DISPERSION AQUEUSE DE POLYURÉTHANE

(30) Priority: 30.07.2021 EP 21188667
(43) Date of publication of application: 05.06.2024
(73) Proprietor: Allnex Austria GmbH, 8402 Werndorf (AT)
(72) Inventor: HARRER, Robert, 8010 Graz (AT); STEINER, Andreas J., 8041 Graz (AT)
(74) Representative: Allnex Austria GmbH
(86) International application number: PCT/EP2022/070164
(87) International publication number: WO 2023/006502

(56) References cited:
- DE-A1- 19 647 982
- US-A1- 2006 264 568
- US-A1- 2007 093 594

## Description

### Field of the Invention

The present invention relates to aqueous polyurethane dispersions of a polyurethane comprising carbonyl groups and optionally a multifunctional compound having functional groups reactable with the polyurethane carbonyl groups. The present invention also relates to a method for the preparation of said aqueous dispersions and to water borne coating formulations prepared from said dispersions, for application and curing on a broad range of substrates. The invention is set out in the appended set of claims.

### Background Art

Aqueous polyurethane have been known in the art.

WO 2006086322 (A1) and US 2006264568 (A1) disclose an aqueous dispersion of polyurethane comprising:
a) a urethane polymer of at least 2000 Dalton number average molecular weight;
b) a ketone functional molecule(s) having a number average molecular weight of less than 2000 Daltons having at least one ketone functional moiety;
c) at least one molecule of number average molecular of less than 2000 Daltons having at least one hydrazine moiety co-reactive with said ketone function moiety; and
d) water.
For the urethane polymer, comprising ketone functional moiety(s), said ketone functional moieties are incorporated in said polyurethane through reaction of a diisocyanate with the reaction product of levulinic acid and a diglycidylether of bisphenol A, thus implying a polyurethane comprising pendant ketone function.

EP 332326 (A2) discloses an aqueous selfcrosslinkable coating composition comprising an aqueous dispersion which comprises at least one polyurethane polymer, wherein said composition has hydrazine (or hydrazone) functional groups and carbonyl functional groups present in the composition to provide a selfcrosslinking reaction, in which said at least one polyurethane polymer takes part, via azomethine formation from the reaction of hydrazine (or hydrazone) functional groups and carbonyl functional groups during and/or after film formation from the aqueous composition.

US 5,147,926 discloses a crosslinkable aqueous polyurethane dispersion having a long shelf life which comprises:
A) polyurethanes which have carbonyl groups, are dispersed in water in the presence of ammonia or of organic amines and are obtained by reacting a) organic polyisocyanates with
   b) compounds which contain one or more active hydrogen atoms and one or more salt groups or one or more groups capable of salt formation and
   c) carbonyl-containing mono- and/or polyalcohols, selected from hydroxyacetone, hydroxybenzaldehyde, acetoin, benzoin or a mixture, and
B) polyhydrazides.
In US 5,147,926 suitable carbonyl-containing mono- and/or polyalcohols c) described are, for example, hydroxyacetone, hydroxybenzaldehyde, acetoin and benzoin. Adducts of diepoxides, such as 2,2-bis-(4-hydroxyphenyl)-propane (bisphenol A) and ketocarboxylic acids, such as pyruvic acid and levulinic acid, are also described as suitable. Other suitable components c) described are ketocarboxylates which are obtainable by partial esterification of ketocarboxylic acids with polyalcohols or by partial transesterification of ketocarboxylates with polyalcohols (partial esters). These esters also have one or more, preferably two, hydroxyl groups.

DE 196 47 982 A1 discloses an aqueous dispersion which comprises a polyurethane polymer with structural units containing keto- and amide groups. For example, N-(2-hydroxyethyl)acetoacetamide is described to react in MEK with
a) polyester polyol made of adipic acid, isophthalic acid and 1,6-hexandiol,
b) dimethylolpropionic acid,
c) 1,4-butandiol, and
d) isophorondiisocyanate.

The so formed polyurethane prepolymer was neutralized with triethylamine, dispersed in water and subsequently diethylentriamine added to the dispersion. After removal of process solvent the dispersion had a solids content of 34,9 % and a pH value of 7,6.

### Aim of the Invention

The present invention aims to provide an aqueous dispersion for coating compositions that do not present the limitations of the prior art.

It is the aim of the present invention to provide an aqueous polyurethane- dispersion with an enhanced solubility and re-solubility compared to the current state in the art systems.

It is a further aim of the present invention to provide aqueous polyurethane dispersions for use in a coating formulation, being part of a multilayer system with improved intercoat adhesion.

### Summary of the invention.

The present invention discloses an aqueous polyurethane dispersion comprising:
- a polyurethane A having pendant acid salt groups and end-standing carbonyl groups, and
- optionally a multifunctional compound B having functional groups reactable with the carbonyl groups of polyurethane **A,**
   wherein
said polyurethane **A,** in its solid unneutralized form, is characterized by:
- a weight average molecular weight comprised between 3,000 and 30,000 g/mol, as measured by GPC in tetrahydrofuran calibrated with polystyrene standards;
- a carbonyl content of more than 150 mmole/kg; and
said polyurethane A is the reaction product of:
- an isocyanate functional polyurethane prepolymer **A1** comprising acid groups; and
- from 50 to 100 moles of a carbonyl functional building block **A2,** for 100 isocyanate equivalents of the isocyanate functional polyurethane prepolymer **A1,** said carbonyl functional building block **A2** being the reaction product of an alpha, beta ethylenically unsaturated group comprising compound comprising a carbonyl group **A21** and a primary amine **A22,** said primary amine **A22** being selected from the group consisting of alkylamines, alkanol amines and mixtures thereof; and
- from 0 to 50 moles of a primary amine **A22,** for 100 isocyanate equivalents of the isocyanate functional polyurethane prepolymer **A1,** said primary amine **A22** being selected from the group consisting of alkylamines, alkanol amines and mixtures thereof; and
- one or more acid neutralizing compound(s) **N;** wherein
   - said carbonyl functional building block **A2** comprises secondary amine groups of the formula R¹-NH-R², wherein R¹ is an alkyl or an hydroxyalkyl moiety and wherein R² is a molecular entity comprising a carbonyl group;
   - said carbonyl functional building block **A2** is bound to the isocyanate functional polyurethane prepolymer **A1** by means of an urea linkage;
   - said carbonyl functional building block **A2** is bound at the extremity of the isocyanate functional polyurethane prepolymer **A1.**

Preferred embodiments of the present invention disclose one or more of the following features:
- polyurethane **A,** in its solid unneutralized form, is characterized either
   - by a hydroxyl content of 0 mmole/kg, for R¹ being and alkyl group and optional additional alkylamine; or
   - by a hydroxyl content of at least 250 mmole/kg, for R¹ being an hydroxyalkyl group and optional additional alkanolamine; or
   - by a hydroxyl content comprised between 0 mmole/kg and at least 250 mmole/kg, for R¹ being a mixture of alkyl and hydroxyalkyl groups, and optional additional alkylamines, alkanolamines, or a mixture thereof;
- the carbonyl groups of carbonyl functional building block **A2** are of the ketone and/or aldehyde type;
- the carbonyl functional building block **A2** is the Michael addition reaction product of:
   - an alpha, beta ethylenically unsaturated group comprising compound comprising a carbonyl group **A21,** said alpha, beta ethylenically unsaturated group comprising compound comprising a carbonyl group **A21** being selected from the group consisting of acrolein, methacrolein, diacetone-acrylamide, crotonaldehyde, 4-vinylbenzaldehyde, vinyl alkyl ketones of 4 to 7 carbon atoms such as vinyl methyl ketone, and acryloxy- and methacryloxy-alkyl propanols of formula CH₂=CHR³-C=O-O-CHR⁴-CR⁵R⁶-C=O-H, where R³ is H or methyl, R⁴ is H or alkyl of 1 to 3 carbon atoms, R⁵ is alkyl of 1 to 3 carbon atoms, and R⁶ is alkyl of 1 to 4 carbon atoms; and
   - a primary amine **A22** selected from the group consisting of C1-C6 alkylamines, C1-C6 alkanolamines and mixtures thereof;
- the carbonyl functional building block **A2** is the Michael addition reaction product of
   - a primary amine **A22** of the formula HO-(CH₂)n-NH₂ and/or H-(CH₂)n-NH₂, wherein n is an integer of from 1 to 6; and
   - diacetone acrylamide **A21;**
- the isocyanate functional polyurethane prepolymer **A1** is the reaction product of:
   - one or more polyisocyanate(s) **I;**
   - one or more isocyanate reactive compound(s) **IC** having at least two isocyanate reactive groups selected from the group consisting of monomeric compounds **ICM,** polymeric compounds **ICP** and mixtures thereof; and
   - one or more isocyanate-reactive monomer(s) **ICMA** having at least two isocyanate reactive groups and at least one acid group or group being able to form an acid when contacted with water;
   wherein isocyanate groups of **I** are in stoichiometric excess of isocyanate reactive groups of **IC** and **ICMA;**
   - the (optional) multifunctional compound **B** comprises at least two hydrazide functional groups;
   - the (optional) multifunctional compound **B** is selected from the group consisting of oxalic acid dihydrazide, malonic acid dihydrazide, succinic acid dihydrazide, glutaric acid dihydrazide, adipic acid dihydrazide cyclohexane dicarboxylic acid dihydrazide, azelaic acid dihydrazide, and sebacic acid dihydrazide;
   - the mole ratio of the carbonyl functional groups of polyurethane **A** to the functional groups of multifunctional compound **B** is from 0.7 to 1.3.

The present invention further discloses a method for the preparation of the aqueous polyurethane dispersion comprising the steps of:
a. mixing one or more polymeric compound(s) **ICP** having at least two isocyanate reactive groups with one or more monomer(s) **ICM** having at least two isocyanate reactive groups in the presence of one or more isocyanate-reactive monomers **ICMA** having at least two isocyanate reactive groups and an acid group or group being able to form an acid when contacted with water, and heating the mixture to a temperature of at least 60°C for at least 10 minutes under stirring;
b. continuously adding a sub-stoichiometric quantity of one or more multifunctional isocyanate(s) I to the mixture of step a), over a time period of from ten minutes to eighty minutes while keeping the temperature in a range of from 60 °C to 150 °C, to form a hydroxyl-functional polyurethane prepolymer;
c. maintaining the reaction product op step b) at a temperature comprised between 120 and 135°C for a time period of from 30 to 90 minutes, and subsequently cooling down to a temperature comprised between 60 and 100°C;
d. adding, in one shot, a further amount of one or more multifunctional isocyanate(s) **I,** in stoichiometric excess, optionally in the presence of one or more compound(s) **ICM** and **ICMA,** to the hydroxyl-functional polyurethane prepolymer of step c) while stirring at a temperature of from 60°C to 130°C, and continuing the reaction at a temperature of from 70 to 150°C for at least one hour, to form an isocyanate-functional polyurethane prepolymer **A1** with an isocyanate value corresponding to the theoretical one;
e. adding, in one shot, a mixture of compound **A2,** and optionally one or more primary amine(s) **A22** and optionally water, to the isocyanate-functional polyurethane prepolymer **A1** of step d) standing at a temperature comprised between 70 and 95°C, and homogenizing for at least 10 minutes at the resulting temperature, to convert the isocyanate-functional polyurethane prepolymer **A1** into a polyurethane comprising end-standing carbonyl groups;
f. adding, in one shot, one or more neutralizing agent(s) **N,** in water, to the polyurethane of step e) comprising acid groups and carbonyl groups, and homogenizing for at least 10 minutes, to convert the acid groups into the corresponding salt, resulting in polyurethane **A** comprising pendant acid salt groups and end-standing carbonyl groups;
g. continuously adding deionized water, pre-warmed at a temperature comprised between 50 and 70°C, to the polyurethane **A** of step f), while vigorously stirring during at least 10 minutes and homogenizing for a further at least 20 minutes at a temperature comprised between 50 and 70°C, to form an aqueous dispersion of polyurethane **A;**
h. cooling down the aqueous dispersion of polyurethane **A** of step g) to a temperature below 40°C and optionally adding multifunctional compound **B;**
i. adding deionized water to the aqueous dispersion of step h) comprising polyurethane **A** and optionally multifunctional compound **B,** to adjust the solid content to 40 +/-1 % by weight.

Preferred embodiments of the method of the present invention disclose one or more of the following features:
- the carbonyl functional building block **A2,** added in step e) is prepared by:
   - heating **A21** under nitrogen, at a temperature comprised between 50 and 80°C, until entirely molten;
   - adding a 1 to 45 percentage molar excess of **A22,** in one shot; and
   - heating the mixture of **A21** and **A22** to a temperature comprised between 60 and 85°C for a period comprised between 1 and 24 hours, until full conversion of the ethylenically unsaturated bond, as confirmed by Fourier-transform infrared spectroscopy;
- the one or more neutralizing agent(s) **N,** added in step f) is (are) selected from the group consisting of primary, secondary and tertiary amines and strong Arrhenius bases such as the hydroxides of alkali metals and alkaline earth alkali metals.

The present invention further discloses a coating composition comprising the aqueous polyurethane dispersion and one or more additives selected from the group consisting of organic solvents, defoamers, coalescing agents, flow modifiers, rheology additives, fillers, pigments, active pigments, dyes, wetting agents, emulsifiers, surfactants, thickeners, heat stabilizers, levelling agents, anti-cratering agents, sedimentation inhibitors, UV absorbers and antioxidants.

A preferred embodiment of the coating composition of the present invention provides a selfcrosslinking reaction via azomethine formation during and/or after film formation.

The present invention further discloses the use of the coating composition comprising the aqueous polyurethane dispersion, for coating a substrate selected from the group consisting of wood, engineered wood, metal, glass, cloth, composites, concrete, ceramics, leather, paper, plastics and foam.

### Detailed Description of the Invention.

It has been found that an aqueous polyurethane dispersion comprising:
- a polyurethane **A** having pendant acid salt groups and end-standing carbonyl groups, and
- optionally a multifunctional compound **B** having functional groups reactable with the carbonyl groups of polyurethane **A;**
lead to coating compositions with enhanced solubility and re-solubility.

Preferably, the aqueous polyurethane dispersion comprises polyurethane **A** having pendant acid salt groups and end-standing carbonyl groups, and multifunctional compound **B** having functional groups reactable with the carbonyl groups of polyurethane **A.**

The polyurethane **A** of the present invention is the reaction product of an isocyanate functional polyurethane prepolymer **A1** and carbonyl functional building block **A2,** or is the reaction product of an isocyanate functional polyurethane prepolymer **A1** and a mixture comprising carbonyl functional building block **A2** and one or more primary amines **A22,** said carbonyl functional building block **A2** comprising secondary amine groups of the formula R¹-NH-R², wherein R¹ is an alkyl or an hydroxyalkyl moiety and wherein R² is a molecular entity comprising a carbonyl group.

The isocyanate functional polyurethane prepolymer **A1** is the reaction product of an stoichiometric excess of one or more polyisocyanate(s) **I,** relative to the total of isocyanate reactive compounds **IC.**

The isocyanate reactive compounds **IC,** used in the present invention, preferably comprise at least two isocyanate reactive groups, and are selected from monomeric compounds **ICM** having at least two isocyanate reactive groups; polymeric compounds **ICP** having at least two isocyanate reactive groups; and monomeric compounds **ICMA** having at least two isocyanate reactive groups and an at least one acid group or an acid group precursor, and mixtures thereof.

The one or more polyisocyanate(s) I is (are) selected from the group consisting of aromatic or aliphatic or mixed aliphatic-aromatic isocyanates, and are preferably selected from the group consisting of trimethylene diisocyanate, tetramethylene diisocyanate, pentamethylene diisocyanate, hexamethylene diisocyanate (HDI), propylene diisocyanate, ethylethylene diisocyanate, 2,3-dimethylethylenediisocyanate, 1-methyltrimethylene diisocyanate, cyclopentylene 1,3-diisocyanate, cyclohexylene 1,4-diisocyanate, cyclohexylene 1,2-diisocyanate, phenylene 1,3-diisocyanate, phenylene 1,4-diisocyanate, 2,4-toluene diisocyanate, 2,6-toluene diisocyanate, biphenylene 4,4'-diisocyanate, bis-(4-isocyanatophenyl)methane (MDI), naphthylene 1,5-diisocyanate, naphthylene 1,4-diisocyanate, 1-isocyanatomethyl-5-isocyanato-1,3,3-trimethylcyclohexane (IPDI), bis-(4-isocyanatocyclohexyl)methane (H12-MDI), 4,4'-diiso-cyanato-diphenyl ether, 2,3-bis-(8-isocyanatooctyl)-4-octyl-5-hexylcyclohexene, trimethylhexamethylene diisocyanates, 1,3-bis(2-isocyanatopropan-2-yl)benzene, meta-Tetramethylxylylene diisocyanate (TMXDI), uretdiones of the above diisocyanates, isocyanurates of the above diisocyanates and allophanates of the above diisocyanates and mixtures thereof.

Preferably the one or more polyisocyanates is (are) selected from the group consisting of 2,4-toluene diisocyanate, 2,6-toluene diisocyanate, 1,3-bis(2-isocyanatopropan-2-yl)benzene and mixtures thereof.

The one or more polyisocyanate(s) **I** can be obtained from petrochemical feedstock.

Alternatively and preferred, where possible, the polyisocyanates **I** are obtained from renewable feedstock. Particularly preferred is isophorone diisocyanate obtained from bio-based acetone. Other preferred polyisocyanates derived in part from renewable feedstocks are for example 1,5-pentamethylene diisocyanate, diisocyanates of the methyl or ethyl esters of I-lysine, isosorbide-based diisocyanates, furan based diisocyanate, bis(4-isocyanato-2-methoxyphenoxy) alkane, bis(4-isocyanato- 2,6-dimethoxyphenoxy)alkane, 2,4-diisocyanato-1-pentadecylbenzene, di- and polyisocyanates based on fatty acids, dimer fatty acids and vegetable oils, 1-isocyanato-10-[(isocyanatomethyl)thio]decane and a product known under the tradename TOLONATE^{™} X FLO 100.

In yet another alternative, the one or more polyisocyanate(s) **I** is (are) obtained from petrochemical feedstock and/or renewable feedstock.

In the context of the present description, "renewable feedstock" refers to natural resources which will replenish to replace the portion depleted by usage and consumption, either through natural reproduction or other recurring processes (in a finite amount of time in a human time scale). Substances or mixtures of substances obtained from such renewable feedstock should have in total a bio-based carbon content of more than 20% by weight of total carbon content of the substance or mixture, the bio-carbon content being determined using the ASTM D6866-20 standard.

The monomeric compounds **ICM** having at least two isocyanate reactive groups preferably are monomeric compounds having at least two hydroxyl groups, or having at least two primary amino groups, or having at least one hydroxyl group and at least one primary amino group.

The monomeric compounds **ICM** having at least two isocyanate reactive groups can be obtained from petrochemical feedstock.

Preferably the monomeric compounds **ICM** having at least two hydroxyl groups are selected from the group consisting of 1,2-ethanediol, 1,2- and 1,3-propanediol, 1,2- and 1,4-butanediol, 2,2'-oxydi(ethan-1-ol), 2,2-dimethyl-1,3-propanediol, 2-methyl-2,4-pentanediol, 1,4-bis-hydroxymethylcyclohexane, 1,6-hexanediol, 1,8-octanediol, 1,10-decanediol, 1,12-dodecanediol, 1,13-tridecanediol, 1,18-octadecanediol, 1,21-heneicosanediol, 1,25-pentacosanediol, isosorbide, isomannide, isoidide and mixture thereof.

Alternatively and preferred, where possible, said monomeric compounds **ICM** having at least two hydroxyl groups (e.g. 1,3-propanediol, isosorbide, isomannide, isoidide) are obtained from renewable feedstock.

In yet another alternative, said monomeric compounds **ICM** having at least two hydroxyl groups are obtained from petrochemical feedstock and/or renewable feedstock.

Preferably the monomeric compounds **ICM** having at least two primary amino groups are selected from the group consisting of 1,4-diaminobutane, 1,6-diaminohexane, 2-methyl-1,5-diaminopentane and mixtures thereof.

Preferably the monomeric compounds **ICM** having at least one hydroxyl group and at least one primary amino group are selected from the group consisting of ethanolamine, propanolamine, 2-(2-amino-ethylamino-)ethanol and mixtures thereof.

The monomeric compound **ICM** may comprise a mixture of
- one or more monomeric compounds having at least two hydroxyl groups and one or more monomeric compounds having at least two primary amino groups, or
- one or more monomeric compounds having at least two hydroxyl groups and one or more compounds having at least one hydroxyl group and at least one primary amino group, or
- one or more monomeric compounds having at least two primary amino groups and one or more compounds having at least one hydroxyl group and at least one primary amino group, or
- one or more monomeric compounds having at least two hydroxyl groups, one or more monomeric compounds having at least two primary amino groups and or more compounds having at least one hydroxyl group and at least one primary amino group.

Preferably the polymeric compounds **ICP** having at least two isocyanate reactive groups are polymeric compounds **ICP** having at least two hydroxyl groups.

Preferably the polymeric compounds **ICP** are characterized by an hydroxyl number comprised between 20 and 400 mg KOH/g, more preferably between 40 and 300 mg KOH/g, most preferably between 50 and 250 mg KOH/g.

The polymeric compounds **ICP** can be obtained from petrochemical feedstock.

Preferably the polymeric compounds **ICP** having at least two hydroxyl groups are selected from the group consisting of polyesters having at least two hydroxyl groups **ICP1,** polyethers having at least two hydroxyl groups **ICP2,** polycarbonates having at least two hydroxyl groups **ICP3** and mixtures thereof.

The polyesters **ICP1** having at least two hydroxyl groups preferably have two hydroxyl groups and are prepared from stoichiometric excess of one or more diols and one or more diacids,
- said diols being preferably selected from the group consisting of 1,2-ethanediol, 1,2- and 1,3-propanediol, 1,2- and 1,4-butanediol, 2,2'-oxydi(ethan-1-ol), 2,2-dimethyl-1,3-propanediol, 2-methyl-2,4-pentanediol, 1,4-bis-hydroxymethylcyclo- hexane, 1,6-hexanediol, 1,8-octanediol, 1,10-decanediol, 1,12-dodecanediol, 1,13-tridecanediol, 1,18-octadecanediol, 1,21-heneicosanediol, 1,25-pentacosane diol, isosorbide, isomannide, isoidide and mixture thereof;
- said diacids being preferably selected from the group consisting of malonic acid, succinic acid, glutaric acid, adipic acid, octanedioic acid, and also dimeric fatty acids having up to forty carbon atoms, isophthalic acid, terephthalic acid, naphthalene dicarboxylic acids and mixtures thereof.

Optionally one or more hydroxy-carboxylic acids, such as for example hydroxybenzoic acid, lactic acid, gamma-hydroxybutyric acid, delta-hydroxyvaleric acid, and epsilon-hydroxycaproic acid, in combination with one or more diols may be used for the preparation of the hydroxyl-functional polyesters **ICP1.**

Preferably the polyesters **ICP1** are the condensation product of diacids selected from the group consisting of adipic acid, isophthalic acid and mixtures thereof and a stoichiometric excess of diols selected from the group consisting of 1,4 butanediol, 1,6-hexanediol, 2,2'-oxydi(ethan-1-ol), 2,2-dimethyl-1,3-propanediol and mixtures thereof, said polyesters being characterized by a hydroxyl number comprised between 20 and 400 mg KOH/g, preferably between 30 and 250 mg KOH/g, more preferably between 40 and 150 mg KOH/g and an acid number of less than 3 mg KOH/g, preferably less than 2 mg KOH/g, more preferably less than 1 mg KOH/g said acid number being residual and generated by end-standing unreacted acid functionalities.

Alternatively and preferred, where possible, said diols (e.g. 1,3-propanediol), diacids (e.g. succinic acid) or hydroxy-carboxylic acid(s) (e.g. lactic acid) used for the preparation of the polyesters **ICP1,** are obtained from renewable feedstock.

In yet another alternative, the polyesters **ICP1** are obtained from petrochemical feedstock and/or renewable feedstock.

By hydroxyl-functional polyester **ICP1** having two hydroxyl groups the present invention should be understood as a polyester having almost two hydroxyl groups and a negligible amount of carboxylic acid groups, since a 100% conversion is hardly to achieve.

The polyether **ICP2** preferably are poly(oxyalkylene) glycols comprising between 2 and 6 alkylradicals, more preferably the polyethers are selected from the group consisting of poly(oxyethylene)glycol, poly(oxypropylene)glycol, poly (oxytetramethylene)glycol and mixtures thereof.

The polyether **ICP2** having at least two hydroxyl groups include products obtained by the polymerisation of a cyclic oxide, for example ethylene oxide, propylene oxide or tetrahydrofuran or by the addition of one or more such oxides to polyfunctional initiators, for example water, ethylene glycol, propylene glycol, diethylene glycol, cyclohexane dimethanol, glycerol, trimethylolpropane, pentaerythritol or Bisphenol A. Especially useful polyethers include polyoxypropylene diols and triols, poly (oxyethylene-oxypropylene) diols and triols obtained by the simultaneous or sequential addition of ethylene and propylene oxides to appropriate initiators and polytetramethylene ether glycols obtained by the polymerisation of tetrahydrofuran. Amine-terminated polyetherpolyols may also be used.

Preferably the polyethers **ICP2** are poly(oxyalkylene) glycols comprising between 2 and 4 alkylradicals, more preferably the polyethers are selected from the group consisting of poly(oxyethylene)glycol, poly(oxypropylene)glycol, poly (oxytetramethylene)glycol and mixtures thereof.

Alternatively and preferred, where possible, polyethers **ICP2** are poly(oxyalkylene) glycols obtained from renewable feedstock, more preferably poly(oxyalkylene) glycols obtained from bio-based 1,3-propandiol.

In yet another alternative, the polyethers **ICP2** are obtained from petrochemical feedstock and/or renewable feedstock.

The polycarbonate **ICP3** compounds having at least two hydroxyl groups preferably are prepared by reaction of polyols, such as 1,3-propanediol, 1,4-butanediol, 1,6-hexanediol, diethylene glycol, triethylene glycol, 1,4-bishydroxymethylcyclohexane, 2,2-bis(4-hydroxycyclohexyl) propane, neopentylglycol, trimethylolpropane or pentaerythritol, with di-carbonates, such as dimethyl, diethyl or diphenyl carbonate, or phosgene.

Alternatively and preferred, where possible, the polycarbonate **ICP3** compounds are obtained from renewable feedstock, more preferably polycarbonate compounds obtained from bio-based polyols (e.g. bio-based 1,3-propanediol or 1,5-pentanediol).

In yet another alternative, the polycarbonate **ICP3** compounds are obtained from petrochemical feedstock and/or renewable feedstock.

Other polymeric compounds **ICP,** useful for the preparation of the isocyanate functional polyurethane prepolymer **A1** of the present invention, include polyesteramides, polythioethers, polyacetals, polyolefins or polysiloxanes, said other compounds **ICP** having at least two hydroxyl groups.

The monomeric compounds **ICMA** having at least two isocyanate reactive groups and at least one acid group or acid group precursor, such as an anhydride, preferably are monomers having at least two hydroxyl groups and at least one acid group or acid group precursor. More preferably the one or more **ICMA** monomers are selected from the group consisting of 2,2-(bis-hydroxymethyl)acetic acid, 2,2-(bishydroxymethyl)-propionic acid, 2,2-(bishydroxymethyl)butyric acid and mixtures thereof.

The monomeric compounds **ICMA** having at least two isocyanate reactive groups and at least one acid group or acid group precursor, are, at a later stage of the polyurethane **A** preparation, converted into anionic dispersant groups, by converting the acid group into an acid salt group through the addition of one or more neutralizing compound(s) **N.**

The one or more neutralizing compound(s) **N** preferably are selected from the group consisting of primary, secondary and tertiary amines and strong Arrhenius bases such as the hydroxides of alkali metals and alkaline earth alkali metals.

More preferably the neutralizing compound(s) **N** are selected from the group consisting of ammonia, compounds having not more than one hydroxyl group and at least one tertiary amino group per molecule, and mixtures thereof.

Most preferably the neutralizing compound(s) **N** are selected from the group consisting of ammonia, trimethylamine, N,N-dimethylaminoethanol, 1-dimethylamino-2-propanol, 1-dimethylamino-3-propanol, 1-deoxy-1-(dimethylamino)-D-glucitol, N-(2-hydroxy ethyl)piperazine and mixtures thereof.

Carbonyl functional building block **A2** comprises secondary amine groups of the formula R¹-NH-R², wherein R¹ is an alkyl or an hydroxyalkyl moiety, and wherein R² is a molecular entity comprising a carbonyl group, and is the reaction product of an alpha, beta ethylenically unsaturated group comprising compound comprising a carbonyl group **A21** and a primary amine **A22** selected from the group consisting of C1-C6 alkylamines, C1-C6 alkanolamines and mixtures thereof.

The primary alkylamine **A22** is selected from the group consisting of methylamine, ethylamine, n-propylamine, iso-propylamine, n-butylamine, iso-butylamine, sec-butylamine, n-amylamine, iso-amylamine, n-hexylamine, 2-aminohexane, isohexylamine, 3,3-dimethyl-2-butanamine, 2-amino-4-methylpentane, 3,3-dimethylbutylamine, 3,3-dimethyl-2-butylamine, 1-amino-2-ethyl-n-butane, 3-amino-3-methylpentane and mixtures thereof.

Preferably the primary alkyl amine **A22** is selected from the group consisting of one or more structures of the formula CH₃-(CH₂)n-NH₂ wherein n is an integer of from 1 to 5 (or of the formula H-(CH₂)n-NH₂ wherein n is an integer of from 1 to 6); more preferably the primary alkylamine **A22** is butylamine.

The primary alkanolamine **A22** is selected from the group consisting of methanolamine, ethanolamine, 3-amino-1-propanol, 3-amino-2-propanol, 1-amino-2-propanol, 4-amino-1-butanol, 3-amino-1-butanol, 2-amino-1-butanol, 2-amino-2-methyl-1 propanol, 5-amino-1-pentanol, 4-amino-1-pentanol, 3-amino-1-pentanol, 2-amino-1-pentanol, 5-amino-2-pentanol, 4-amino-2-pentanol, 3-amino-2-pentanol, 1-amino-3-pentanol 2-amino-3-pentanol, 4-amino-2-methyl-1-butanol, 4-amino-3-methyl-1-butanol, 2-amino-3-methyl-1-butanol, 4-amino-2-methyl-2-butanol, 3-amino-2,2-dimethyl-1-propanol, 6-amino-1-hexanol, 2-amino-1-hexanol, 3-amino-1-hexanol, 6-amino-3-hexanol, 2-amino-3-methylpentan-1-ol, and mixtures thereof.

Preferably the primary alkanolamine **A22** is selected from the group consisting of one or more structures of the formula HO-(CH₂)n-NH₂ wherein n is an integer of from 1 to 6; more preferably the primary alkanolamine **A22** is ethanolamine.

The alpha, beta ethylenically unsaturated group comprising compound comprising a carbonyl group **A21** is selected from the group consisting of acrolein, methacrolein, diacetone-acrylamide, crotonaldehyde, 4-vinylbenzaldehyde, vinyl alkyl ketones of 4 to 7 carbon atoms (such as vinyl methyl ketone), and acryloxy- and methacryloxy-alkyl propanols of formula:

CH₂=CHR³-C=O-O-CHR⁴-CR⁵R⁶-C=O-R⁷,

where R³ is H or methyl, R⁴ is H or alkyl of 1 to 3 carbon atoms, R⁵ is alkyl of 1 to 3 carbon atoms, R⁶ is alkyl of 1 to 4 carbon atoms, R⁷ is H or alkyl of 1 to 3 carbon atoms.

Preferably the alpha, beta ethylenically unsaturated group comprising compound comprising a carbonyl group **A21** is diacetone-acrylamide.

As known in the art, the reaction of the primary amine **A22** with the alpha, beta ethylenically unsaturated group comprising compound comprising a carbonyl group **A21** is a Michael addition reaction, wherein **A22** is the Michael donor and **A21** is the Michael acceptor.

The polyurethane **A** of the present invention is the reaction product of
- the isocyanate functional polyurethane prepolymer **A1** and
- the secondary amines of carbonyl functional building blocks **A2** and
- the primary amines of optional compound **A22,**
wherein carbonyl functional building blocks **A2** and optional compounds **A22** are bound to the isocyanate terminated polyurethane prepolymer **A1** by means of an urea linkage.

Preferably polyurethane **A** is the reaction product of
- the isocyanate functional polyurethane prepolymer **A1,** and
- from 50 to 100 moles, preferably 70 to 99 moles, of secondary amines of carbonyl functional building block **A2,** and
- from 0 to 50 moles, preferably from 1 to 30 moles, of primary amines of optional compound **A22,**
for 100 isocyanate equivalents of the isocyanate functional polyurethane prepolymer **A1.**

Preferably the carbonyl group is of the ketone- or the aldehyde-type.

The carbonyl functional building block **A2** is bound at the extremities of the isocyanate functional polyurethane prepolymer **A1,** resulting in polyurethane **A** comprising end-standing carbonyl groups.

The polyurethane **A** of the present invention is substantially free of pendant carbonyl groups, i.e. the polyurethane comprises less than 5%, preferably less than 4%, more preferably less than 3%, most preferably less than 2%, most preferably less than 1%, most preferably 0% of pendant carbonyl groups, relative to the total amount of carbonyl groups, wherein pendant carbonyl groups should be understood as carbonyl group comprising molecular entities, bound to the polyurethane at locations situated along the entire length of the polyurethane and not at the extremities of the polyurethane.

Preferably polyurethane **A** only comprises end-standing carbonyl groups and no pendant carbonyl groups,.

Preferably polyurethane **A** comprises a carbonyl group at least at one of its extremities, more preferably polyurethane **A** comprises a carbonyl group at all its extremities. Most preferably polyurethane **A** is a linear polyurethane comprising carbonyl groups at both of its extremities.

Polyurethane **A,** in its solid unneutralized form, is characterized by a weight average molecular weight comprised between 3,000 and 30,000 g/mole, preferably between 5,000 and 20,000 g/mole, more preferably between 7,000 and 20,000 g/mole, most preferably between 7,000 and 15,000 g/mole.

Polyurethane **A,** in its solid unneutralized form, is characterized by a carbonyl content of more than 150 mmole/kg, preferably between 170 and 700 mmole/kg, more preferably between 200 and 700 mmole/kg, most preferably between 250 and 700 mmole/kg, or even between 300 and 700 mmole/kg.

Polyurethane **A,** in its solid unneutralized form, is characterized by:
- by a hydroxyl content of 0 mmole/kg, for
   - carbonyl functional building block **A2** being the reaction product of an alpha, beta ethylenically unsaturated group comprising compound comprising a carbonyl group **A21** and a C1-C6 primary alkylamine **A22,** and
   - optional primary amine **A22** being a C1-C6 primary alkylamine; or
- by a hydroxyl content of at least 250 mmole/kg, preferably between 250 and 650 mmole/kg, more preferably between 350 and 550 mmole/kg, for
   - carbonyl functional building block **A2** being the reaction product of an alpha, beta ethylenically unsaturated group comprising compound comprising a carbonyl group **A21** and a C1-C6 primary alkanolamine **A22,** and
   - optional primary amine **A22** being a C1-C6 primary alkanolamine; or
- by a hydroxyl content comprised between 5 mmole/kg and at least 250 mmole/kg, preferably between 10 and 640 mmole/kg, more preferably between 20 and 530 mmole/kg, for
   - carbonyl functional building block **A2** being the reaction product of an alpha, beta ethylenically unsaturated group comprising compound comprising a carbonyl group **A21** and a primary amine **A22** comprising a mixture of C1-C6 primary alkylamine and C1-C6 primary alkanolamine and
   - optional primary amine **A22** being a mixture of C1-C6 alkylamines and C1-C6 alkanolamines.

Polyurethane **A,** in its solid unneutralized form, is characterized by an acid content between 300 and 700 mmole/kg, preferably between 350 and 650 mmole/kg, more preferably between 400 and 600 mmole/kg, most preferably between 450 and 550 mmole/kg, originating from the pendant acid groups of monomeric compounds **ICMA.**

By polyurethane **A,** in its solid unneutralized form, the present invention should be understood as:
- unneutralized polyurethane **A:**
   polyurethane **A** wherein the carboxylic acid groups or acid group precursors of monomeric compounds **ICMA** are not converted into anionic dispersant groups, by the addition of one or more neutralizing compounds **N.** In its unneutralized form polyurethane **A** comprises pendant acid groups or acid group precursors;
- solid polyurethane **A:**
   polyurethane **A,** wherein deionized water, added, together with the carbonyl functional building block **A2,** for the preparation of carbonyl terminated unneutralized polyurethane **A,** is not taken into account.

The multifunctional compound **B** having functional groups reactable with the carbonyl groups of polyurethane **A** include polyhydrazide and polyhydrazone. Examples of such polyhydrazides and polyhydrazones include:
- dicarboxylic acid bishydrazides of formula:

   H₂N-NH-C(O)-R⁸-C(O)-NH-NH₂

   and
- dicarboxylic acid bis-hydrazones of formula:

   R⁹R¹⁰C=N-NH-C(O)-R⁸-C(O)-NH-N=CR⁹R¹⁰

   wherein R⁸ is a covalent bond or a polyalkylene (preferably polymethylene) or alicyclic group having from 1 to 34 carbon atoms or a divalent aromatic ring, and R⁹ and R¹⁰ are selected from the group consisting of H and (C₁ to C₆) alkyl and alicyclic groups. Examples of suitable dihydrazides include oxalic acid dihydrazide, malonic acid dihydrazide, succinic acid dihydrazide, glutaric acid dihydrazide, adipic acid dihydrazide, cyclohexane dicarboxylic acid dihydrazide, azelaic acid dihydrazide, and sebacic acid dihydrazide.

Other suitable compounds **B** are polyhydrazides of carbonic acid, e.g. carbonic acid dihydrazide and compounds of the general formula:

H₂N-NH-CO-(NH-NH-CO-)ₓ-NH-NH₂

where x is from 1 to 5, preferably from 1 to 3, and
bis-semicarbazides, especially aliphatic and cycloaliphatic bis-semicarbazides of the general formula:

H₂N-NH-CO-NH-R¹¹-HN-CO-NH-NH₂

where -R¹¹- is a straight or branched aliphatic radical of 2 to 7 carbon atoms or a carbocyclic radical of 6 to 8 carbon atoms, e.g. o-, m- or p-phenylene or toluene or cyclohexylidene or methylcyclohexylidene.

Other suitable compounds **B** are polyhydrazides of aromatic polycarboxylic acids, e.g. the dihydrazides of phthalic acid, terephthalic acid and isophthalic acid, and the dihydrazides, the trihydrazide and the tetrahydrazide of pyromellitic acid.

Other suitable compounds **B** are trihydrazides, e.g. nitrilotriacetic acid trihydrazide, and tetrahydrazides, e.g. ethylenediaminetetraacetic acid tetrahydrazide.

Other suitable compounds **B** are dihydrazino- and trihydrazino-triazine, thiocarbohydrazide and N,N'-diaminoguanidine, as well as hydrazinopyridine derivatives of the type of 2-hydrazino-pyridine-5-carboxylic acid hydrazide, 3-chloro-2-hydrazinopyridine-5-carboxylic acid hydrazide, 6-chloro-2-hydrazinopyridine-4-carboxylic acid hydrazide and 2,5-dihydrazinopyridine-4-carboxylic acid, and bis-thiosemicarbazides as well as bis-hydrazines of alkylene-bis-acrylamides, dihydrazinoalkanes and dihydrazines of aromatic hydrocarbons, e.g. 1,4-dihydrazinobenzene, 1,3-dihydrazinobenzene and 2,3-dihydrazinonaphthalene.

Preferably the multifunctional compound **B** is adipic acid dihydrazide.

Preferably the aqueous polyurethane dispersion of the present invention comprises polyurethane **A,** having pendant acid salt groups and end-standing carbonyl functional groups, and multifunctional compound **B,** wherein the mole ratio of the carbonyl functional groups of polyurethane **A** to the (hydrazide) functional groups of multifunctional compound **B** is from 0.7 to 1.3, preferably from 0.8 to 1.2, more preferably from 0.9 to 1.1.

The aqueous dispersion comprising polyurethane **A** and multifunctional compound **B** is preferably characterized by:
- a solid content comprised between 30 and 60% by weight;
- a dynamic viscosity at 23°C and 100 rpm, according to ISO 2555-1974, comprised between 50 and 5,000 mPa.s.;
- a pH, according to DIN 19268, comprised between 7 and 8.5;
- a Z-average particle size, according to ISO 22412, comprised between 20 and 150 nm.

The aqueous polyurethane dispersion is prepared is a multi-step process comprising the steps of:
a. mixing one or more polymeric compound(s) **ICP** having at least two isocyanate reactive groups with one or more monomer(s) **ICM** having at least two isocyanate reactive groups in the presence of one or more isocyanate-reactive monomers **ICMA** having at least two isocyanate reactive groups and an acid group or group being able to form an acid when contacted with water, and heating the mixture to a temperature of at least 60°C, preferably at least 80°C, more preferably at least 100°C, most preferably at least 120°C for at least 10 minutes, preferably for at least 20 minutes, under stirring;
b. continuously adding a sub-stoichiometric quantity of one or more multifunctional isocyanate(s) **I** to the mixture of step a), over a time period of from 10 minutes to 80 minutes, preferably of from 20 minutes to 70 minutes; more preferably from 30 to 60 minutes while keeping the temperature in a range of from 60 °C to 150 °C, preferably of from 80 to 140°C, more preferably of from 100 to 135°C to form a hydroxyl-functional polyurethane prepolymer;
c. maintaining the reaction product of step b) at a temperature comprised between 120 and 135°C, preferably between 130 and 135°C for a time period of from 30 to 90 minutes, preferably of from 40 to 80 minutes, more preferably of from 50 to 70 minutes, and subsequently cooling down to a temperature comprised between 60 and 100°C, preferably between 70 and 90°C;
d. adding, in one shot, a further amount of one or more multifunctional isocyanate(s) **I,** in stoichiometric excess, optionally in the presence of one or more compound(s) **ICM** and **ICMA,** to the hydroxyl-functional polyurethane prepolymer of step c) while stirring at a temperature of from 60°C to 130°C, preferably of from 70 to 90°C, and continuing the reaction at a temperature of from 70 to 150°C, preferably at a temperature of from 75 to 90°C for at least one hour, preferably for a time period comprised between 1 and 3 hours, more preferably for a time period comprised between 1 and 2 hours, to form an isocyanate-functional polyurethane prepolymer **A1** with an isocyanate value corresponding to the theoretical one (confirmed by titration);
e. adding, in one shot, a mixture of carbonyl functional building block **A2,** and optionally one or more primary amine(s) **A22** and optionally water, to the isocyanate-functional polyurethane prepolymer A1 of step d) standing at a temperature comprised between 70 and 95°C, preferably between 75 and 90°C, and homogenizing for at least 10 minutes, preferably for at least 15 minutes, at the resulting temperature, to convert the isocyanate-functional polyurethane prepolymer **A1** into a polyurethane comprising end-standing carbonyl groups;
f. adding, in one shot, one or more neutralizing agent(s) **N,** in water, to the polyurethane of step e) comprising acid groups and carbonyl groups and homogenizing for at least 10 minutes, preferably for at least 15 minutes, to convert the acid groups into the corresponding salt, resulting in polyurethane **A;**
g. continuously adding deionized water, pre-warmed at a temperature comprised between 50 and 70°C, preferably comprised between 55 and 65°C to the polyurethane **A** of step f) while vigorously stirring during at least 10 minutes, preferably at least 15 minutes and homogenizing for a further at least 20 minutes, preferably for a further at least 30 minutes at a temperature comprised between 50 and 70°C, preferably between 55 and 65°C, to form an aqueous dispersion of polyurethane **A;**
h. cooling down the aqueous dispersion of polyurethane **A** of step g) to a temperature below 40°C, preferably below 30°C and optionally adding multifunctional compound **B;**
i. adding deionized water to the aqueous dispersion of step h) comprising polyurethane **A** and optionally multifunctional compound **B,** to adjust the solid content to 40 +/-1% by weight.

Calculating theoretical isocyanate values, as well as the confirmation by titration thereof, is well known to the skilled person in the art and is of general practice.

The addition in one shot, in step d) to f), should be understood as an addition over a time period which is at least 50% less, preferably at least 60% less, more preferably at least 70% less, most preferably at least 80% less or even at least 90% less than the homogenization period of the final mixture.

Carbonyl functional building block **A2,** added in step e) is prepared in a separate reaction by
- heating **A21** under nitrogen, at a temperature comprised between 50 and 80°C, preferably between 60 and 70°C, until entirely molten;
- adding a 1 to 45 percentage, preferably a 1 to 35 percentage molar excess of **A22,** in one shot; and
- heating the mixture of **A21** and **A22** to a temperature comprised between 60 and 85°C, preferably between 65 and 80°C, for a period comprised between 1 and 24 hours, preferably between 1 and 15 hours until full conversion of the ethylenically unsaturated bond, as confirmed by *Fourier-transform infrared spectroscopy* (FTIR).

The addition in one shot of **A22 to A21** should be understood as an addition over a time period which is at least 50% less, preferably at least 60% less, more preferably at least 70% less, most preferably at least 80% less or even at least 90% less than the homogenization period of the mixture of **A22** and **A21.**

The aqueous dispersions of the present invention preferably are used in waterborne coating compositions, further comprising one or more additives selected from the group consisting of organic solvents, defoamers, coalescing agents, flow modifiers, rheology additives, fillers, pigments, active pigments, dyes, wetting agents, emulsifiers, surfactants, thickeners, heat stabilizers, levelling agents, anti-cratering agents, sedimentation inhibitors, UV absorbers and antioxidants.

Alternatively, the aqueous polyurethane dispersion of the invention can be used in waterborne adhesive compositions. More specifically, the waterborne adhesive composition can comprise the aqueous polyurethane dispersion and one or more additives selected from the group consisting of organic solvents, defoamers, coalescing agents, flow modifiers, rheology additives, fillers, pigments, active pigments, dyes, wetting agents, emulsifiers, surfactants, thickeners, heat stabilizers, levelling agents, anti-cratering agents, sedimentation inhibitors, UV absorbers and antioxidants.

The water borne coating composition of the present invention can be applied to a wide variety of substrates selected from the group consisting of wood, engineered wood, metal, glass, cloth, composites, concrete, ceramics, leather, paper, plastics and foam.

The water borne coating compositions may be applied to the substrate by any conventional method including brushing, flow coating, roll coating, draw-down, coil coating, curtain coating, immersion coating, dip coating, spray coating, vacuum coating and the like.

In general the water borne coating compositions are applied at a liquid coating thickness adapted for obtaining a dry film thickness comprised between 5 and 50 µm, preferably between 8 and 40 µm, more preferably between 10 and 30 µm, most preferably between 10 and 20 µm.

The water borne coating compositions provide a selfcrosslinking reaction via azomethine formation during and/or after film formation.

### EXAMPLES

The following illustrative examples are merely meant to exemplify the present invention but are not intended to limit or otherwise define the scope of the present invention.

### Example 1: Synthesis of keto-functional building block A2 via Michael addition.

In a reactor purged with nitrogen 150.00 g (0.8864 mole) solid diacetone acrylamide **(A21)** was charged and heated to 65°C until the material was entirely molten. Then a slight molar excess of 72.19 g (1.1819 mole) of ethanolamine **(A22)** was added to the reactor in one shot and the resulting reaction mixture was stirred at 70°C to 75°C for 1 to 4 hours until full conversion of the double bond of diacetone acrylamide, confirmed by FTIR measurement. The reaction product was then cooled to ambient temperature and used as crude product without further purification in the synthesis of the carbonyl-terminated polyurethane. The keto-functional building block **(A2)** was characterized by a keto content of 3.9894 mmole/g, an amino content of 5.3193 mmole/g and a hydroxyl content of 5,3193 mmole/g.

### Example 2 and 3: Synthesis of keto-functional building block A2 via Michael addition.

In table 1 the compositions of the keto-functional building blocks **A2,** of Example 2 to 3 are reproduced. The keto-functional building blocks **A2** of Example 2 and 3 were prepared according to the process of Example 1.

**Table 1**

| **Components** | **Ex. 2** | **Ex. 3** |
|---|---|---|
| Diacetone acrylamide | 150.00 g (0.8864 mole) | 150.00 g (0.8864 mole) |
| Ethanolamine | 54.89 g (0.8987 mole) | --- |
| Butylamine | --- | 86.40 g (1.1819 mole) |

| **Functionalities** | | |
|---|---|---|
| Keto-content [mmole/g] | 4.3262 | 3.7496 |
| Amino-content [mmole/g] | 4.3863 | 4.9996 |
| Hydroxy-content [mmole/g] | 4.3863 | 0 |

### Example 4: Synthesis of aqueous dispersion comprising polyurethane A having pendant acid salt groups and carbonyl end-standing groups, and multifunctional compound B.

In a reactor purged with nitrogen 275.21 g (0.201 mole) of polyester diol **(ICP)** (consisting of 18.2% 1,6-hexane diol, 18.1% diethylene glycol, 11.5% neopentyl glycol, 18.4% isophthalic acid and 33.8% adipic acid), 0.15 g (0.0014 mole) of neopentyl glycol **(ICM)** and 31.33 g (0.2344 mole) of dimethylol propionic acid **(ICMA)** were filled, subsequently heated to 130°C and homogenized at 130°C for 30 minutes. Then 26.10 g (0.1499 mole) of toluene diisocyanate **(I)** was continuously added over a period of 45 to 60 minutes, so that the resulting reaction temperature was constantly kept in a range of 130° to 135°C. Once the entire quantity of toluene diisocyanate **(I)** was added, the resulting reaction mixture was kept at 130°C to 135°C for one hour and then cooled to 80°C. Then 101.31 g (0.4147 mole) of meta-Tetramethylxylylene diisocyanate (TMXDI) **(I)** were added to the reactor in one shot and the resulting reaction mixture was stirred at 80°C to 85°C until the theoretical isocyanate-value, confirmed by titration, was reached. Typical reaction times for this step were 1 to 2 hours at temperature of 80°C to 85°C. As soon as the theoretical isocyanate-value was confirmed by titration, a mixture of keto-functional building block **(A2)** of Example 1, in 9.92 g deionized water, was added to the reaction mixture in one shot and homogenized for 15 minutes at the resulting reaction temperature. Subsequently, dimethyl ethanolamine neutralizing agent **(N)** in 100 g deionized water was added to the reactor in one shot and homogenized for 15 minutes at the resulting reaction temperature. Then 550 g of deionized water, pre-warmed to 60°C, was added to the reactor continuously while vigorously stirring over a period of 15 minutes and the resulting emulsion was further homogenized at 60°C for additional 30 minutes. Then the reaction mixture was cooled to a temperature of less than 40°C and 15.31 g (0.087 mole) of adipic acid dihydrazide **(B)** was added and homogenized for 15 minutes. Adjustment of the solids content of the final emulsion to 40 +/- 1% was done by addition of 62.42 g of deionized water. The polyurethane dispersion is characterized by a solid content of 40.1% by weight; a pH (10% aqueous solution) of 7.6; a Z-average particle size of 25 nm and a dynamic viscosity of 1802 mPa.s. The solid unneutralized polyurethane **(A)** is characterized by a weight average molecular weight (Mw) of 10,030 g/mole; a keto content of 368 mmole/kg; a hydroxyl content of 490 mmole/kg; and an acid content of 490 mmole/kg.

### Example 5 to 9: Synthesis of aqueous dispersion comprising carbonyl-terminated polyurethane A having pendant acid salt groups and carbonyl end-standing groups, and multifunctional compound B.

In table 2 the compositions of the aqueous dispersions comprising polyurethane **A** having pendant acid salt groups and carbonyl end-standing groups, and multifunctional compound **B** are reproduced for Example 5 to 9. The aqueous dispersions of Example 5 to 9 were prepared according to the process of Example 4.

**Table 2.**

| **Components** | **Example 5** | **Example 6** | **Example 7** | **Example 8** | **Example 9** |
|---|---|---|---|---|---|
| Polyester diol **(ICP)** | 275.21 g | 275.21 g | 275.21 g | 275.21 g | 275.21 g |
| Neopentyl glycol **(ICM)** | 0.15 g (0.0014 mole) | 0.15 g (0.0014 mole) | 0.15 g (0.0014 mole) | 0.15 g (0.0014 mole) | 0.15 g (0.0014 mole) |
| Dimethylol propionic acid **(ICMA)** | 31.44 g (0.2344 mole) | 31.44 g (0.2344 mole) | 31.44 g (0.2344 mole) | 31.44 g (0.2344 mole) | 31.44 g (0.2344 mole) |
| Toluene diisocyanate **(I)** | 26.10 g (0.1499 mole) | 26.10 g (0.1499 mole) | 26.10 g (0.1499 mole) | 26.10 g (0.1499 mole) | 26.10 g (0.1499 mole) |
| meta-Tetramethylxylylene diisocyanate (TMXDI) **(I)** | 101.31 g (0.4147 mole) | 101.31 g (0.4147 mole) | 101.31 g (0.4147 mole) | 101.31 g (0.4147 mole) | 140.42 g (0.5784 mole) |
| Example 1 **(A2)** | 44.08 g (0.1759 mole keto; 0.2345 mole amine; 0.2345 mole hydroxyl) | 44.08 g (0.1759 mole keto; 0.2345 mole amine; 0.2345 mole hydroxyl) | 44.08 g (0.1759 mole keto; 0.2345 mole amine; 0.2345 mole hydroxyl) | --- | --- |
| Example 3 **(A2)** | --- | --- | --- | 46.88 g (0.1758 mole keto; 0.2344 mole amine) | 106.92 g (0.4009 mole keto; 0.5346 mole amine) |
| Ethanolamine **(A22)** | --- | --- | --- | --- | --- |
| Deionized water | 9.92 g | 9.92 g | 9.92 g | 9.92 g | 22.62 g |
| Dimethyl ethanolamine **(N)** | --- | --- | --- | 18.21 g (0.2043 mole) | 18.21 g (0.2043 mole) |
| Triethylamine **(N)** | 20.67 g (0.2043 mole) | --- | --- | --- | --- |
| Genamin Gluco 50 **(N)** | --- | 86.21 g (0.2043 mole) | --- | --- | --- |
| Potassium hydroxide **(N)** | --- | --- | 12.49 g (0.2227 mmole) | --- | --- |

**Table 2 (continued).**

| **Components** | **Example 5** | **Example 6** | **Example 7** | **Example 8** | **Example 9** |
|---|---|---|---|---|---|
| Deionized water | 550 g | 550 g | 550 g | 550 g | 700 g |
| Adipic acid dihydrazide **(B)** | 15.31 g (0.0879 mole) | 15.31 g (0.0879 mole) | 15.31 g (0.0879 mole) | 15.31 g (0.0879 mole) | 34.92 g (0.2005 mole) |
| Deionized water | 60.00 g | 100.00 g | 100.00 g | 66.00 g | 82.00 g |

| **Testing parameters** | | | | | |
|---|---|---|---|---|---|
| Solids content [% by weight] | 40.5 | 39.7 | 39.5 | 40.1 | 39.8 |
| pH (10% aqueous solution) | 7.4 | 7.2 | 7.4 | 7.6 | 8.2 |
| Particle size average [nm] | 33 | 28 | 26 | 41 | 129 |
| Dynamic viscosity (100 1/s; 23°C) [mPa.s ] | 4645 | 61 | 500 | 130 | 74 |

| **Molecular weight by GPC** | | | | | |
|---|---|---|---|---|---|
| Mw [g/mol] | 11,290 | 9,651 | 10,610 | 10,420 | 7,690 |

| **Calculated values** | | | | | |
|---|---|---|---|---|---|
| Keto-content of solid PU | 368 mmole/kg | 368 mmole/kg | 368 mmole/kg | 365 mmole/kg | 691 mmole/kg |
| Keto equiv. weight of solid PU | 2717 g/eq | 2717 g/eq | 2717 g/eq | 2740 g/eq | 1447 g/eq |
| OH-content of solid PU | 490 mmole/kg | 490 mmole/kg | 490 mmole/kg | 0 mmole/kg | 0 mmole/kg |
| OH equiv. weight of solid PU | 2041 g/eq | 2041 g/eq | 2041 g/eq | - | - |
| OH-value of solid PU | 27.5 mg KOH/g | 27.5 mg KOH/g | 27.5 mg KOH/g | 0 mg KOH/g | 0 mg KOH/g |
| Acid-content of solid PU | 490 mmole/kg | 490 mmole/kg | 490 mmole/kg | 487 mmole/kg | 404 mmole/kg |
| Acid equiv. weight of solid PU | 2041 g/eq | 2041 g/eq | 2041 g/eq | 2053 g/eq | 2475 g/eq |

### Comparative Examples 10 to 12.

In table 3 the compositions of the aqueous dispersions of comparative Examples 10 to 12 are listed, prepared according to the process of Example 4, with the exception that:
- for comparative Example 10, the keto-functional building block **A2** of Example 2 is added to a hydroxyl functional polyurethane prepolymer before the second polyisocyanate **I** addition, while primary alkanolamine **A22** is added to the isocyanate terminated polyurethane **A1,** resulting from the second addition of polyisocyanate I to the hydroxyl functional polyurethane prepolymer; the final polyurethane is a hydroxyl terminated polyurethane comprising pendant carbonyl groups;
- for comparative Example 11, there is no addition of keto-functional building block **A2;** only primary alkanolamine **A22** is added to the isocyanate terminated polyurethane **A1;** the final polyurethane is a hydroxyl terminated polyurethane comprising no carbonyl groups;
- for comparative Example 12, there is no addition of keto-functional building block **A2;** only primary alkylamine **A22** is added to the isocyanate terminated polyurethane **A1;** the final polyurethane is a alkyl group terminated polyurethane comprising no carbonyl groups.

**Table 3.**

| **Components** | **Comp. Ex. 10** | **Comp. Ex. 11** | **Comp. Ex. 12** |
|---|---|---|---|
| Polyester prepolymer **(ICP)** | 235.0 g | 275.21 g | 275.21 g |
| Neopentyl glycol **(ICM)** | 0.15 g (0.0014 mole) | 0.15 g (0.0014 mole) | 0.15 g (0.0014 mole) |
| Dimethylol propionic acid **(ICMA)** | 31.44 g (0.2344 mole) | 31.44 g (0.2344 mole) | 31.44 g (0.2344 mole) |
| Toluene diisocyanate **(I)** | 22.29 g (0.1280 mole) | 26.10 g (0.1499 mole) | 26.10 g (0.1499 mole) |
| Example 2 **(A2)** | 40.49 g (0.1752 mole keto; 0.1776 mole amine; 0.1776 mole hydroxyl) | --- | --- |
| meta-Tetramethylxylylene diisocyanate **(I)** | 142.43 g (0,5830 mole) | 101.31 g (0,4147 mole) | 101.31 g (0,4147 mole) |
| Ethanolamine **(A22)** | 14.32 g (0,2344 mol amine; 0,2344 mole hydroxyl) | 14.32 g (0,2344 mole amine; 0,2344 mole hydroxyl) | --- |
| n-Butylamine **(A22)** | --- | --- | 17.13 g (0.2344 mol amine) |
| Deionized water | 9.92 g | 9.92 g | 9.92 g |
| Dimethyl ethanolamine **(N)** | 18.21 g (0.2043 mole) | 18.21 g (0.2043 mole) | 18.21 g (0.2043 mole) |
| Deionized water | 100 g | 100 g | 100 g |
| Deionized water | 550 g | 500 g | 500 g |
| Adipic acid dihydrazide **(B)** | 15.31 g (0.0879 mole) | --- | --- |
| Deionized water | 74.08 g | 44.67 g | 48.78 g |

**Table 3 (continued).**

| **Testing parameters** | | | |
|---|---|---|---|
| Solids content [% by weight)] | 39.7 | 40.0 | 40.0 |
| pH (10% aqueous solution) | 7.5 | 7.3 | 7.8 |
| Particle size average [nm] | 28 | 30 | 357 |
| Dynamic viscosity (100 1/s; 23°C) [mPa.s] | 5352 | 70 | 105 |

| **Molecular weight by GPC** | | | |
|---|---|---|---|
| Mw [g/mol]; | 7,625 | 9,051 | 10,570 |

| **Calculated values** | | | |
|---|---|---|---|
| Keto-content of solid PU | 360 mmole/kg | 0 mmole/kg | 0 mmole/kg |
| Keto equiv. weight of solid PU | 2778 g/eq | - | - |
| OH-content of solid PU | 482 mmole/kg | 523 mmole/kg | 0 mmole/kg |
| OH equivalent weight of solid PU | 2075 g/eq | 1912 g/eq | - |
| OH-value of solid PU | 27.0 mg KOH/g | 29.3 mg KOH/g | 0 mg KOH/g |
| Acid-content of solid PU | 482 mmole/kg | 523 mmole/kg | 519 mmole/kg |
| Acid equiv. weight of solid PU | 2075 g/eq | 1912 g/eq | 1926 g/eq |
| Acid-value of solid PU | 27.0 mg KOH/g | 29.3 mg KOH/g | 29.1 mg KOH/g |

### Coating formulation, Coating application, Test results

Application tests were conducted using ABS/PC plastic panels (BAYBLEND^{®} T65XF, Covestro AG) used in multiple applications like automotive interior and household articles. The following formulations have been prepared:

### Example 13: Preparation of basecoat formulations

Basecoat coating formulations were prepared from the aqueous polyurethane dispersions of Examples 4, 8 and 9 and of Comparative Examples 10, 11 and 12, according to the recipe in table 4.

**Table 4.**

| Step | Nr | Components (ingredients) | Amount (parts) |
|---|---|---|---|
| Q | 1 | PUD binder of Ex. 4, 8, 9, Comp. Ex. 10, Comp. Ex. 11 and Comp. Ex. 12 | 32,8 |
| | | Dimethylethanolamine (DMEA) / 10% water | 1,2 |
| | | Demi water | 8,8 |
| | 2 | Acrylic thickener (RHEOVIS^{®} AS 1130) | 7,1 |
| | | Silicate thickener (LAPONITE^{®} RD) | 11,5 |
| | | Demi water | 8,0 |
| | 3 | Metallic Pigment (STAPA^{®} IL HYDROLAN^{®} S 2100) | 3,8 |
| | | Pigment wetting additive (ADDITOL^{®} XL 250) | 0,2 |
| | | Butylglycol | 5,6 |
| | 4 | Wax additive (ULTRALUBE^{®} E500V) | 6,2 |
| | 5 | i-Butanol | 1,6 |
| | 6 | Dimethylethanolamine (DMEA) / 10% water | 1,0 |
| | | Demi water | 12,2 |
| | | **Total** | **100,0** |

A dimethyl ethanolamine solution (10% strength solution in deionized water) and deionized water (Part Q1) were added to the aqueous polyurethane dispersion of Example 4, 8, 9 and Comparative Example 10, 11, 12, and homogenized with a mechanical stirrer at 900 min⁻¹. After fifteen minutes stirring a 10% strength solution of an acrylic copolymer thickener in deionized water (RHEOVIS^{®}AS 1130, BASF AG), a 3% strength solution of a silicate thickener (LAPONITE^{®} RD, BYK AG) and further deionized water (Part Q2) were added and homogenized for another 10 minutes at 900 min⁻¹. The aluminum flake slurry (Part Q3) was prepared in a separate step by charging the aluminum flakes (silica encapsulated aluminium flakes, HYDROLAN^{®} S-2100, Eckart GmbH), adding the anionic wetting agent (ADDITOL XL^{®} 250, allnex GmbH) and butylglycol and homogenizing with a mechanical stirrer at 600 min⁻¹ for 30 minutes. The homogenized Part Q3 was then added with stirring at 900 min ¹ to the preblended Part Q1 and Q2 and homogenized for another 20 minutes.

The Basecoats prepared in this way were allowed to rest for 12 hours at ambient temperature (23°C). Then Part Q4 (wax additive) and Q5 was added and homogenized for another 5 minutes at 900 min⁻¹. Finally the formulation was completed with Part Q6 and homogenized for another 5 minutes at 700 min⁻¹.

### Example 14: Preparation of the clearcoat formulation

A two pack clearcoat composition was prepared according to the recipe in table 5.

**Table 5.**

| Step | Components (ingredients) | Amount (part) |
|---|---|---|
| X | MACRYNAL^{®} SM 510N/65BACX (allnex) | 52,0 |
| | Butylacetate : solvent naphtha : Xylene = 60 : 15 : 25 | 8,4 |
| | Flow/ leveling additive (ADDITOL^{®} VXL 4930N, allnex) | 0,1 |
| Y | HDI trimer isocyanate (DESMODUR^{®} N3390, Covestro AG) | 19,1 |
| | Butylacetate | 5,5 |
| Z | Butylacetate : solvent naphtha : Xylene=60:15:25 | 14,9 |
| | **Total** | **100,0** |

The components of Part X were mixed for 15 minutes at 700 min⁻¹. Prior to application a pre-blend of a HDI trimer isocyanate crosslinker (DESMODUR^{®} N3390, Coverstro AG) diluted in butylacetate was added (Part Y) to the mixed Part X. Finally spray application was adjusted to 21 seconds (DIN 4 cup at 23 °C, DIN EN ISO 2431) with the pre-mixed solvent composition in Part Z.

### Example 15: Preparation of test panels

ABS/PC plastic panels comprising the basecoat of Example 13 and the clearcoat of Example 14 are represented in table 6.

The coating formulations were applied with a pneumatic spray gun (SATA RP 3000/ 4000/ 5000) around 1.5 - 2.0 bar air pressure. First, the basecoat formulations were applied at around 17 +/- 2 µm dry film thickness. After application a flash off time of ten minutes followed by a baking step at 10 minutes/ 60 °C) was conducted to the applied basecoat formulations. Immediately after the baking step the clearcoat formulation was applied at around 40-45 µm dry film thickness. After 10 minutes flash off time all panels were cured in an oven for 30 minutes at 80 °C followed by a post-cure step for 12 hours at 70 °C.

**Table 6.**

| **Panel** | **Basecoat** | **Clearcoat** |
|---|---|---|
| 1 | Example 13 based on Example 4 | Example 14 |
| 2 | Example 13 based on Example 8 | Example 14 |
| 3 | Example 13 based on Example 9 | Example 14 |
| 4 | Example 13 based on Comp. Ex. 10 | Example 14 |
| 5 | Example 13 based on Comp. Ex. 11 | Example 14 |
| 6 | Example 13 based on Comp. Ex. 12 | Example 14 |

### Example 16: Humidity resistance test.

Panels 1 to 6 were exposed to a humidity resistance test (*hydrolysis ageing*) according Volkswagen standard TL 226 done in a humidity chamber for 72 hours at 90 +/- 2 °C and a relative humidity of more than 96%. Prior to the evaluation of the intercoat adhesion, the test panels were conditioned at room temperature for 4 hours after the test. Intercoat adhesion between basecoat and clearcoat was evaluated performing a cross cut test with tape pull-of (DIN EN ISO 2409) where 0 *= full adhesion* and 5 = complete delamination. Test results are represented in table 7.

**Table 7.**

| Panel | BC - CC | |
|---|---|---|
| | Before | After |
| 1 | 1 | 0 |
| 2 | 3 | 3 |
| 3 | 3 | 2 |
| 4 | 5 | 5 |
| 5 | 5 | 5 |
| 6 | 5 | 5 |

As appears from table 7, the use of the new aqueous polyurethane dispersion, according to the present invention, as basecoat layer in a multi-layer (basecoat - clearcoat) system unexpectedly results in a significantly improved intercoat adhesion after hot water resistance test.

## Claims

1. An aqueous polyurethane dispersion comprising:
- a polyurethane **A** having pendant acid salt groups and end-standing carbonyl groups, and
- optionally a multifunctional compound **B** having functional groups reactable with the carbonyl groups of polyurethane **A,**
wherein
said polyurethane **A,** in its solid unneutralized form, is **characterized by**:
- a weight average molecular weight comprised between 3,000 and 30,000 g/mol, as measured by GPC in tetrahydrofuran calibrated with polystyrene standards;
- a carbonyl content of more than 150 mmole/kg; and
said polyurethane **A** is the reaction product of:
- an isocyanate functional polyurethane prepolymer **A1** comprising acid groups; and
- from 50 to 100 moles of a carbonyl functional building block **A2,** for 100 isocyanate equivalents of the isocyanate functional polyurethane prepolymer **A1,** said carbonyl functional building block **A2** being the reaction product of an alpha, beta ethylenically unsaturated group comprising compound comprising a carbonyl group **A21** and a primary amine **A22,** said primary amine **A22** being selected from the group consisting of alkylamines, alkanol amines and mixtures thereof; and
- from 0 to 50 moles of a primary amine **A22,** for 100 isocyanate equivalents of the isocyanate functional polyurethane prepolymer **A1,** said primary amine **A22** being selected from the group consisting of alkylamines, alkanol amines and mixtures thereof; and
- one or more acid neutralizing compound(s) **N;**
wherein
- said carbonyl functional building block **A2** comprises secondary amine groups of the formula R¹-NH-R², wherein R¹ is an alkyl or an hydroxyalkyl moiety and wherein R² is a molecular entity comprising a carbonyl group;
- said carbonyl functional building block **A2** is bound to the isocyanate functional polyurethane prepolymer **A1** by means of an urea linkage; and
- said carbonyl functional building block **A2** is bound at the extremity of the isocyanate functional polyurethane prepolymer **A1.**

2. The aqueous polyurethane dispersion according to claim 1, wherein polyurethane **A,** in its solid unneutralized form, is characterized either
- by a hydroxyl content of 0 mmole/kg, for R¹ being and alkyl group and optional additional alkylamine; or
- by a hydroxyl content of at least 250 mmole/kg, for R¹ being an hydroxyalkyl group and optional additional alkanolamine; or
- by a hydroxyl content comprised between 0 mmole/kg and at least 250 mmole/kg, for R¹ being a mixture of alkyl and hydroxyalkyl groups, and optional additional alkylamines, alkanolamines, or a mixture thereof.

3. The aqueous polyurethane dispersion according to claims 1 or 2, wherein the carbonyl groups of carbonyl functional building block **A2** are of the ketone and/or aldehyde type.

4. The aqueous polyurethane dispersion according to any of claims 1 to 3, wherein the carbonyl functional building block **A2** is the Michael addition reaction product of:
- an alpha, beta ethylenically unsaturated group comprising compound comprising a carbonyl group **A21,** said alpha, beta ethylenically unsaturated group comprising compound comprising a carbonyl group **A21** being selected from the group consisting of acrolein, methacrolein, diacetone-acrylamide, crotonaldehyde, 4-vinylbenzaldehyde, vinyl alkyl ketones of 4 to 7 carbon atoms such as vinyl methyl ketone, and acryloxy- and methacryloxy-alkyl propanols of formula CH₂=CHR³-C=O-O-CHR⁴-CR⁵R⁶-C=O-H, where R³ is H or methyl, R⁴ is H or alkyl of 1 to 3 carbon atoms, R⁵ is alkyl of 1 to 3 carbon atoms, and R⁶ is alkyl of 1 to 4 carbon atoms; and
- a primary amine **A22** selected from the group consisting of C1-C6 alkylamines, C1-C6 alkanolamines and mixtures thereof

5. The aqueous polyurethane dispersion according to any of claims 1 to 4, wherein the carbonyl functional building block **A2** is the Michael addition reaction product of
- a primary amine **A22** of the formula HO-(CH₂)n-NH₂ and/or H-(CH₂)n-NH₂, wherein n is an integer of from 1 to 6; and
- diacetone acrylamide **A21.**

6. The aqueous polyurethane dispersion according to any of claims 1 to 5, wherein the isocyanate functional polyurethane prepolymer **A1** is the reaction product of:
- one or more polyisocyanate(s) **I**;
- one or more isocyanate reactive compound(s) **IC** having at least two isocyanate reactive groups selected from the group consisting of monomeric compounds **ICM,** polymeric compounds **ICP** and mixtures thereof; and
- one or more isocyanate-reactive monomer(s) **ICMA** having at least two isocyanate reactive groups and at least one acid group or group being able to form an acid when contacted with water;
wherein isocyanate groups of **I** are in stoichiometric excess of isocyanate reactive groups of **IC** and **ICMA.**

7. The aqueous polyurethane dispersion according to any of claims 1 to 6, wherein the multifunctional compound **B** is present and comprises at least two hydrazide functional groups.

8. The aqueous polyurethane dispersion according to any of claims 1 to 7, wherein the multifunctional compound **B** is present and is the reaction product of hydrazine and a polycarboxylic acid.

9. The aqueous polyurethane dispersion according to any of claims 1 to 8, wherein the multifunctional compound **B** is present and is selected from the group consisting of oxalic acid dihydrazide, malonic acid dihydrazide, succinic acid dihydrazide, glutaric acid dihydrazide, adipic acid dihydrazide cyclohexane dicarboxylic acid dihydrazide, azelaic acid dihydrazide, and sebacic acid dihydrazide.

10. The aqueous polyurethane dispersion according to any of claims 1 to 9, wherein the multifunctional compound **B** is present and is adipic acid dihydrazide.

11. The aqueous polyurethane dispersion according to any of claims 1 to 10, wherein the mole ratio of the carbonyl functional groups of polyurethane **A** to the functional groups of multifunctional compound **B** is from 0.7 to 1.3.

12. Method for the preparation of the aqueous polyurethane dispersions according to claim 1 to 11, comprising the steps of;
a. mixing one or more polymeric compound(s) **ICP** having at least two isocyanate reactive groups with one or more monomer(s) **ICM** having at least two isocyanate reactive groups in the presence of one or more isocyanate-reactive monomers **ICMA** having at least two isocyanate reactive groups and an acid group or group being able to form an acid when contacted with water, and heating the mixture to a temperature of at least 60°C for at least 10 minutes under stirring;
b. continuously adding a sub-stoichiometric quantity of one or more multifunctional isocyanate(s) I to the mixture of step a), over a time period of from ten minutes to eighty minutes while keeping the temperature in a range of from 60 °C to 150 °C, to form a hydroxyl-functional polyurethane prepolymer;
c. maintaining the reaction product op step b) at a temperature comprised between 120 and 135°C for a time period of from 30 to 90 minutes, and subsequently cooling down to a temperature comprised between 60 and 100°C;
d. adding, in one shot, a further amount of one or more multifunctional isocyanate(s) **I,** in stoichiometric excess, optionally in the presence of one or more compound(s) **ICM** and **ICMA,** to the hydroxyl-functional polyurethane prepolymer of step c) while stirring at a temperature of from 60°C to 130°C, and continuing the reaction at a temperature of from 70 to 150°C for at least one hour, to form an isocyanate-functional polyurethane prepolymer **A1** with an isocyanate value corresponding to the theoretical one;
e. adding, in one shot, a mixture of compound **A2,** and optionally one or more primary amine(s) **A22** and optionally water, to the isocyanate-functional polyurethane prepolymer **A1** of step d) standing at a temperature comprised between 70 and 95°C, and homogenizing for at least 10 minutes at the resulting temperature, to convert the isocyanate-functional polyurethane prepolymer **A1** into a polyurethane comprising end-standing carbonyl groups;
f. adding, in one shot, one or more neutralizing agent(s) **N,** in water, to the polyurethane of step e) comprising acid groups and carbonyl groups, and homogenizing for at least 10 minutes, to convert the acid groups into the corresponding salt, resulting in polyurethane **A** comprising pendant acid salt groups and end-standing carbonyl groups;
g. continuously adding deionized water, pre-warmed at a temperature comprised between 50 and 70°C, to the polyurethane **A** of step f), while vigorously stirring during at least 10 minutes and homogenizing for a further at least 20 minutes at a temperature comprised between 50 and 70°C, to form an aqueous dispersion of polyurethane **A;**
h. cooling down the aqueous dispersion of polyurethane **A** of step g) to a temperature below 40°C and optionally adding multifunctional compound **B;**
i. adding deionized water to the aqueous dispersion of step h) comprising polyurethane **A** and optionally multifunctional compound **B,** to adjust the solid content to 40 +/-1 % by weight.

13. The method according to claim 12, wherein carbonyl functional building block **A2,** added in step e) is prepared by:
- heating **A21** under nitrogen, at a temperature comprised between 50 and 80°C, until entirely molten;
- adding a 1 to 45 percentage molar excess of **A22,** in one shot; and
- heating the mixture of **A21** and **A22** to a temperature comprised between 60 and 85°C for a period comprised between 1 and 24 hours, until full conversion of the ethylenically unsaturated bond, as confirmed by Fourier-transform infrared spectroscopy.

14. The method according to claim 12 or 13, wherein the one or more neutralizing agent(s) **N,** added in step f) is (are) selected from the group consisting of primary, secondary and tertiary amines and strong Arrhenius bases such as the hydroxides of alkali metals and alkaline earth alkali metals.

15. A coating composition comprising the aqueous polyurethane dispersion according to any of claims 1 to 11 and one or more additives selected from the group consisting of organic solvents, defoamers, coalescing agents, flow modifiers, rheology additives, fillers, pigments, active pigments, dyes, wetting agents, emulsifiers, surfactants, thickeners, heat stabilizers, levelling agents, anti-cratering agents, sedimentation inhibitors, UV absorbers and antioxidants.

16. A coating composition according to claim 15 providing a selfcrosslinking reaction via azomethine formation during and/or after film formation.

17. Use of the coating composition according to claim 15 or 16, for coating a substrate selected from the group consisting of wood, engineered wood, metal, glass, cloth, composites, concrete, ceramics, leather, paper, plastics and foam.

## Patentansprüche

1. Wässerige Polyurethandispersion, umfassend:
- ein Polyurethan **A** mit Säuresalzseitengruppen und endständigen Carbonylgruppen und
- gegebenenfalls eine multifunktionelle Verbindung **B** mit funktionellen Gruppen, die mit den Carbonylgruppen von Polyurethan **A** umgesetzt werden können,
wobei
das Polyurethan **A** in seiner festen nicht neutralisierten Form **gekennzeichnet ist durch**:
- ein gewichtsmittleres Molekulargewicht zwischen 3.000 und 30.000 g/mol, gemessen mittels GPC in Tetrahydrofuran, kalibriert mit Polystyrol-Standards;
- einen Carbonylgehalt von mehr als 150 mmol/kg; und
das Polyurethan **A** das Reaktionsprodukt von:
- einem Säuregruppen umfassenden Isocyanat-funktionellen Polyurethan-Präpolymer **A1** und
- 50 bis 100 mol eines Carbonyl-funktionellen Bausteins **A2,** für 100 Isocyanatäquivalente des Isocyanat-funktionellen Polyurethan-Präpolymers **A1,** wobei der Carbonyl-funktionelle Baustein **A2** das Reaktionsprodukt einer eine alpha,beta-ethylenisch ungesättigte Gruppe umfassenden Verbindung, die eine Carbonylgruppe **A21** umfasst, und eines primären Amins **A22** ist, wobei das primäre Amin **A22** aus der Gruppe ausgewählt ist, die aus Alkylaminen, Alkanolaminen und Gemischen davon besteht; und
- 0 bis 50 mol eines primären Amins **A22,** für 100 Isocyanatäquivalente des Isocyanat-funktionellen Polyurethan-Präpolymers **A1,** wobei das primäre Amin **A22** aus der Gruppe ausgewählt ist, die aus Alkylaminen, Alkanolaminen und Gemischen davon besteht; und
- einer oder mehreren säureneutralisierenden Verbindungen **N** ist;
wobei
- der Carbonyl-funktionelle Baustein A2 sekundäre Amingruppen der Formel R¹-NH-R² umfasst, wobei R¹ eine Alkyl- oder einer Hydroxyalkyleinheit ist und wobei R² eine molekulare Einheit ist, die eine Carbonylgruppe umfasst;
- der Carbonyl-funktionelle Baustein **A2** mithilfe einer Harnstoffverknüpfung an das Isocyanat-funktionelle Polyurethan-Präpolymer **A1** gebunden ist; und
- der Carbonyl-funktionelle Baustein **A2** an das Ende des Isocyanat-funktionellen Polyurethan-Präpolymers **A1** gebunden ist.

2. Wässerige Polyurethandispersion nach Anspruch 1, wobei Polyurethan **A** in seiner nicht neutralisierten Form entweder
- durch einen Hydroxylgehalt von 0 mmol/kg, wenn R¹ eine Alkylgruppe ist, und gegebenenfalls zusätzliches Alkylamin oder
- durch einen Hydroxylgehalt von mindestens 250 mmol/kg, wenn R¹ eine Hydroxyalkylgruppe ist, und gegebenenfalls zusätzliches Alkanolamin oder
- durch einen Hydroxylgehalt zwischen 0 mmol/kg und mindestens 250 mmol/kg, wenn R¹ ein Gemisch aus Alkyl- und Hydroxyalkylgruppen ist, und
gegebenenfalls zusätzliche Alkylamine, Alkanolamine oder ein Gemisch davon gekennzeichnet ist.

3. Wässerige Polyurethandispersion nach den Ansprüchen 1 oder 2, wobei die Carbonylgruppen des Carbonyl-funktionellen Bausteins **A2** vom Keton- und/oder Aldehyd-Typ sind.

4. Wässerige Polyurethandispersion nach einem der Ansprüche 1 bis 3, wobei der Carbonyl-funktionelle Baustein **A2** das Michael-Additionsreaktionsprodukt von:
- einer eine alpha,beta-ethylenisch ungesättigte Gruppe umfassenden Verbindung, die eine Carbonylgruppe **A21** umfasst, wobei die eine alpha,beta-ethylenisch ungesättigte Gruppe umfassende Verbindung, die eine Carbonylgruppe **A21** umfasst, aus der Gruppe ausgewählt ist, die aus Acrolein, Methacrolein, Diacetonacrylamid, Crotonaldehyd, 4-Vinylbenzaldehyd, Vinylalkylketonen mit 4 bis 7 Kohlenstoffatomen wie Vinylmethylketon, und Acryloxy- und Methacryloxyalkylpropanolen der Formel CH₂=CHR³-C=O-O-CHR⁴-CR⁵R⁶-C=O-H, worin R³ H oder Methyl ist, R⁴ H oder Alkyl mit 1 bis 3 Kohlenstoffatomen ist, R⁵ Alkyl mit 1 bis 3 Kohlenstoffatomen ist und R⁶ Alkyl mit 1 bis 4 Kohlenstoffatomen ist, besteht; und
- einem primären Amin **A22,** ausgewählt aus der Gruppe, bestehend aus C1-C6-Alkylaminen, C1-C6-Alkanolaminen und Gemischen davon,
ist.

5. Wässerige Polyurethandispersion nach einem der Ansprüche 1 bis 4, wobei der Carbonyl-funktionelle Baustein **A2** das Michael-Additionsreaktionsprodukt von
- einem primären Amin **A22** der Formel HO-(CH₂)n-NH₂ und/oder H-(CH₂)ₙ-NH₂, wobei n eine ganze Zahl von 1 bis 6 ist; und
- Diacetonacrylamid **A21**
ist.

6. Wässerige Polyurethandispersion nach einem der Ansprüche 1 bis 5, wobei das Isocyanat-funktionelle Polyurethan-Präpolymer **A1** das Reaktionsprodukt von:
- einem oder mehreren Polyisocyanaten **I;**
- einer oder mehreren Isocyanat-reaktiven Verbindungen **IC** mit mindestens zwei Isocyanat-reaktiven Gruppen, ausgewählt aus der Gruppe, bestehend aus monomeren Verbindungen **ICM,** polymeren Verbindungen **ICP** und Gemischen davon; und
- einem oder mehreren Isocyanat-reaktiven Monomeren **ICMA** mit mindestens zwei Isocyanat-reaktiven Gruppen und mindestens einer Säuregruppe oder Gruppe, die beim Kontaktieren mit Wasser eine Säure bilden kann, ist,
wobei Isocyanatgruppen von **I** in stöchiometrischem Überschuss von Isocyanat-reaktiven Gruppen von **IC** und **ICMA** vorliegen.

7. Wässerige Polyurethandispersion nach einem der Ansprüche 1 bis 6, wobei die multifunktionelle Verbindung **B** vorliegt und mindestens zwei Hydrazid-funktionelle Gruppen umfasst.

8. Wässerige Polyurethandispersion nach einem der Ansprüche 1 bis 7, wobei die multifunktionelle Verbindung **B** vorliegt und das Reaktionsprodukt von Hydrazin und einer Polycarbonsäure ist.

9. Wässerige Polyurethandispersion nach einem der Ansprüche 1 bis 8, wobei die multifunktionelle Verbindung **B** vorliegt und aus der Gruppe ausgewählt ist, die aus Oxalsäuredihydrazid, Malonsäuredihydrazid, Bernsteinsäuredihydrazid, Glutarsäuredihydrazid, Adipinsäuredihydrazid, Cyclohexandicarbonsäuredihydrazid, Azelainsäuredihydrazid und Sebacinsäuredihydrazid besteht.

10. Wässerige Polyurethandispersion nach einem der Ansprüche 1 bis 9, wobei die multifunktionelle Verbindung B vorliegt und Adipinsäuredihydrazid ist.

11. Wässerige Polyurethandispersion nach einem der Ansprüche 1 bis 10, wobei das Molverhältnis der Carbonyl-funktionellen Gruppen von Polyurethan **A** zu den funktionellen Gruppen der multifunktionellen Verbindung **B** 0,7 bis 1,3 beträgt.

12. Verfahren zur Herstellung der wässerigen Polyurethandispersionen nach Anspruch 1 bis 11, umfassend die Schritte;
a. Mischen einer oder mehrerer polymerer Verbindungen **ICP** mit mindestens zwei Isocyanat-reaktiven Gruppen mit ein oder mehreren Monomeren **ICM** mit mindestens zwei Isocyanat-reaktiven Gruppen in der Gegenwart eines oder mehrerer Isocyanat-reaktiver Monomere **ICMA** mit mindestens zwei Isocyanat-reaktiven Gruppen und einer Säuregruppe oder Gruppe, die beim Kontaktieren mit Wasser eine Säure bilden kann, und Erwärmen des Gemisches auf eine Temperatur von mindestens 60 °C für mindestens 10 Minuten unter Rühren;
b. kontinuierliches Zugeben einer unterstöchiometrischen Menge von ein oder mehreren multifunktionellen Isocyanaten **I** zu dem Gemisch von Schritt a) über einen Zeitraum von zehn Minuten bis achtzig Minuten, während die Temperatur in einem Bereich von 60 °C bis 150 °C gehalten wird, unter Bildung eines Hydroxyl-funktionellen Polyurethan-Präpolymers;
c. Halten des Reaktionsproduktes von Schritt b) bei einer Temperatur zwischen 120 und 135 °C für einen Zeitraum von 30 bis 90 Minuten und anschließend Herunterkühlen auf eine Temperatur zwischen 60 und 100 °C;
d. in einem Schuss Zugeben einer weiteren Menge von ein oder mehreren multifunktionellen Isocyanaten **I** in stöchiometrischem Überschuss, gegebenenfalls in der Gegenwart einer oder mehrerer Verbindungen **ICM** und **ICMA,** zu dem Hydroxyl-funktionellen Polyurethan-Präpolymer von Schritt c), während bei einer Temperatur von 60 °C bis 130 °C gerührt wird, und Fortsetzen der Reaktion bei einer Temperatur von 70 bis 150 °C für mindestens eine Stunde unter Bildung eines Isocyanat-funktionellen Polyurethan-Präpolymers **A1** mit einem Isocyanatwert, der dem theoretischen Wert entspricht;
e. in einem Schuss Zugeben eines Gemisches von Verbindung **A2** und gegebenenfalls ein oder mehreren primären Aminen **A22** und gegebenenfalls Wasser zu dem Isocyanat-funktionellen Polyurethan-Präpolymer **A1** von Schritt d), das bei einer Temperatur zwischen 70 und 95 °C steht, und Homogenisieren für mindestens 10 Minuten bei der resultierenden Temperatur, um das Isocyanat-funktionelle Polyurethan-Präpolymer **A1** in ein Polyurethan umzuwandeln, das endständige Carbonylgruppen umfasst;
f. in einem Schuss Zugeben eines oder mehrerer Neutralisierungsmittel N in Wasser zu dem Polyurethan von Schritt e), das Säuregruppen und Carbonylgruppen umfasst, und Homogenisieren für mindestens 10 Minuten, um die Säuregruppen in das entsprechende Salz umzuwandeln, was zu Polyurethan **A** führt, das Säuresalzseitengruppen und endständige Carbonylgruppen umfasst;
g. kontinuierliches Zugeben von deionisiertem Wasser, das bei einer Temperatur zwischen 50 und 70 °C vorerwärmt wurde, zu dem Polyurethan **A** von Schritt f), während über mindestens 10 Minuten kräftig gerührt wird, und Homogenisieren für mindestens weitere 20 Minuten bei einer Temperatur zwischen 50 und 70 °C unter Bildung einer wässerigen Dispersion von Polyurethan **A;**
h. Herunterkühlen der wässerigen Dispersion von Polyurethan **A** von Schritt g) auf eine Temperatur unter 40 °C und gegebenenfalls Zugeben der multifunktionellen Verbindung **B;**
i. Zugeben von deionisiertem Wasser zu der wässerigen Dispersion von Schritt h), die Polyurethan **A** und gegebenenfalls die multifunktionelle Verbindung **B** umfasst, um den Feststoffgehalt auf 40 +/- 1 Gew.-% einzustellen.

13. Verfahren nach Anspruch 12, wobei der Carbonyl-funktionelle Baustein **A2,** der in Schritt e) zugegeben wird, durch:
- Erwärmen von **A21** unter Stickstoff bei einer Temperatur zwischen 50 und 80 °C, bis es gänzlich geschmolzen ist;
- Zugeben eines 1- bis 45%igen molaren Überschusses von **A22** in einem Schuss; und
- Erwärmen des Gemisches aus **A21** und **A22** auf eine Temperatur zwischen 60 und 85 °C für einen Zeitraum zwischen 1 und 24 Stunden bis zur vollständigen Umwandlung der ethylenisch ungesättigten Bindung, die mittels Fourier-Transformations-Infrarot-Spektroskopie bestätigt wird.

14. Verfahren nach Anspruch 12 oder 13, wobei das eine oder die mehreren Neutralisierungsmittel N, die in Schritt f) zugegeben werden, aus der Gruppe ausgewählt sind, die aus primären, sekundären und tertiären Aminen und starken Arrhenius-Basen wie den Hydroxiden von Alkalimetallen und Erdalkalimetallen besteht.

15. Beschichtungszusammensetzung, umfassend die wässerige Polyurethandispersion nach einem der Ansprüche 1 bis 11 und ein oder mehrere Additive, ausgewählt aus der Gruppe, bestehend aus organischen Lösungsmitteln, Entschäumern, Koaleszenzmitteln, Fließmodifikatoren, Rheologieadditiven, Füllstoffen, Pigmenten, aktiven Pigmenten, Farbstoffen, Benetzungsmitteln, Emulgatoren, oberflächenaktiven Mitteln, Verdickungsmitteln, Wärmestabilisatoren, Egalisierungsmitteln, Anti-Krater-Mittlen, Absetzverhinderungsmitteln, UV-Absorbern und Antioxidationsmitteln.

16. Beschichtungszusammensetzung nach Anspruch 15, die eine Selbstvernetzungsreaktion über Azomethin-Bildung während und/oder nach Filmbildung liefert.

17. Verwendung der Beschichtungszusammensetzung nach Anspruch 15 oder 16 zur Beschichtung eines Substrats, ausgewählt aus der Gruppe, bestehend aus Holz, Holzwerkstoffen, Metall, Glas, Stoff, Verbundstoffen, Beton, Keramik, Leder, Papier, Kunststoff und Schaum.

## Revendications

1. Dispersion aqueuse de polyuréthane comprenant :
- un polyuréthane **A** ayant des groupes sel d'acide pendants et des groupes carbonyle terminaux, et
- éventuellement un composé multifonctionnel **B** ayant des groupes fonctionnels réagissant avec les groupes carbonyle du polyuréthane **A,**
dans laquelle
ledit polyuréthane **A,** sous sa forme solide non neutralisée, est **caractérisé par** :
- un poids moléculaire moyen en poids compris entre 3 000 et 30 000 g/mole, mesuré par GPC dans du tétrahydrofuranne calibré avec des étalons de polystyrène ;
- une teneur en carbonyle supérieure à 150 mmole/kg ; et
ledit polyuréthane **A** est le produit de réaction de :
- un prépolymère de polyuréthane à fonction isocyanate **A1** comprenant des groupes de type acide ; et
- de 50 à 100 moles d'un bloc de construction fonctionnalisé par carbonyle **A2,** pour 100 équivalents isocyanate du prépolymère polyuréthane à fonction isocyanate **A1,** ledit bloc de construction à fonction carbonyle **A2** étant le produit de réaction d'un groupe alpha, bêta éthyléniquement insaturé comprenant un composé comprenant un groupe carbonyle **A21** et une amine primaire **A22,** ladite amine primaire **A22** étant choisie dans le groupe constitué par les alkylamines, les alcanolamines et leurs mélanges ; et
- de 0 à 50 moles d'une amine primaire **A22,** pour 100 équivalents isocyanate du prépolymère de polyuréthane à fonction isocyanate **A1**, ladite amine primaire **A22** étant choisie dans le groupe constitué par les alkylamines, les alcanolamines et leurs mélanges ; et
- un ou plusieurs composés de neutralisation d'acide **N** ;
dans lequel
- ledit bloc de construction à fonction carbonyle **A2** comprend des groupes amine secondaire de formule R¹-NH-R², dans laquelle R¹ est un groupe alkyle ou hydroxyalkyle et dans laquelle R² est une entité moléculaire comprenant un groupe carbonyle ;
- ledit bloc de construction à fonction carbonyle **A2** est lié au prépolymère de polyuréthane à fonction isocyanate **A1** au moyen d'une liaison urée ; et
- ledit bloc de construction à fonction carbonyle **A2** est lié à l'extrémité du prépolymère polyuréthane à fonction isocyanate **A1.**

2. Dispersion aqueuse de polyuréthane selon la revendication 1, dans laquelle le polyuréthane **A**, sous sa forme solide non neutralisée, est caractérisé soit
- par une teneur en hydroxyle de 0 mmole/kg, pour R¹ étant un groupe alkyle et éventuellement une alkylamine supplémentaire ; ou
- par une teneur en hydroxyle d'au moins 250 mmole/kg, pour R¹ étant un groupe hydroxyalkyle et éventuellement une alcanolamine supplémentaire ; ou
- par une teneur en hydroxyle comprise entre 0 mmole/kg et au moins 250 mmole/kg, pour R¹ étant un mélange de groupes alkyle et hydroxyalkyle, et éventuellement d'alkylamines, d'alcanolamines supplémentaires ou un mélange de celles-ci.

3. Dispersion aqueuse de polyuréthane selon la revendication 1 ou 2, dans laquelle les groupes carbonyle du bloc de construction à fonction carbonyle **A2** sont du type cétone et/ou aldéhyde.

4. Dispersion aqueuse de polyuréthane selon l'une quelconque des revendications 1 à 3, dans laquelle le bloc de construction à fonction carbonyle **A2** est le produit de réaction d'addition de Michael de :
- un groupe alpha, bêta éthyléniquement insaturé comprenant un composé comprenant un groupe carbonyle **A21,** ledit groupe alpha, bêta éthyléniquement insaturé comprenant un groupe carbonyle **A21** étant choisi dans le groupe constitué par l'acroléine, la méthacroléine, le diacétone-acrylamide, le crotonaldéhyde, le 4-vinylbenzaldéhyde, les vinylalkylcétones de 4 à 7 atomes de carbone telles que le vinylméthylcétone, et les acryloxy- et méthacryloxyalkylpropanols de formule CH₂=CHR³-C=O-O-CHR⁴-CR⁵R⁶-C=O-H, dans laquelle R³ est H ou méthyle, R⁴ est H ou alkyle ayant 1 à 3 atomes de carbone, R⁵ est alkyle ayant 1 à 3 atomes de carbone, et R⁶ est alkyle de 1 à 4 atomes de carbone ; et
- une amine primaire **A22** choisie dans le groupe constitué par les alkylamines en C1-C6, les alcanolamines en C1-C6 et leurs mélanges.

5. Dispersion aqueuse de polyuréthane selon l'une quelconque des revendications 1 à 4, dans laquelle le bloc de construction à fonction carbonyle **A2** est le produit de réaction d'addition de Michael de
- une amine primaire **A22** de formule HO-(CH₂)n-NH₂ et/ou H-(CH₂)n-NH₂, dans lesquelles n est un entier de 1 à 6 ; et
- diacétone acrylamide **A21.**

6. Dispersion aqueuse de polyuréthane selon l'une quelconque des revendications 1 à 5, dans laquelle le prépolymère de polyuréthane à fonction isocyanate **A1** est le produit de réaction de :
- un ou plusieurs polyisocyanates **I** ;
- un ou plusieurs composés **IC** réactifs avec les isocyanates ayant au moins deux groupes réactifs avec les isocyanates choisis dans le groupe constitué par les composés monomériques **ICM,** les composés polymériques **ICP** et leurs mélanges ; et
- un ou plusieurs monomères **ICMA** réactifs avec les isocyanates ayant au moins deux groupes réactifs avec les isocyanates et au moins un groupe de type acide ou un groupe capable de former un acide lorsqu'il est mis en contact avec l'eau ;
dans laquelle les groupes isocyanate de **I** sont en excès stœchiométrique des groupes réactifs avec les isocyanates de **IC** et **ICMA.**

7. Dispersion aqueuse de polyuréthane selon l'une quelconque des revendications 1 à 6, dans laquelle le composé multifonctionnel **B** est présent et comprend au moins deux groupes à fonction hydrazide.

8. Dispersion aqueuse de polyuréthane selon l'une quelconque des revendications 1 à 7, dans laquelle le composé multifonctionnel **B** est présent et est le produit de réaction d'hydrazine et d'un acide polycarboxylique.

9. Dispersion aqueuse de polyuréthane selon l'une quelconque des revendications 1 à 8, dans laquelle le composé multifonctionnel **B** est présent et est choisi dans le groupe constitué par le dihydrazide d'acide oxalique, le dihydrazide d'acide malonique, le dihydrazide d'acide succinique, le dihydrazide d'acide glutarique, le dihydrazide d'acide adipique, le dihydrazide d'acide cyclohexane dicarboxylique, le dihydrazide d'acide azélaïque et le dihydrazide d'acide sébacique.

10. Dispersion aqueuse de polyuréthane selon l'une quelconque des revendications 1 à 9, dans laquelle le composé multifonctionnel **B** est présent et est le dihydrazide de l'acide adipique.

11. Dispersion aqueuse de polyuréthane selon l'une quelconque des revendications 1 à 10, dans laquelle le rapport molaire des groupes à fonction carbonyle du polyuréthane **A** sur les groupes fonctionnels du composé multifonctionnel **B** est de 0,7 à 1,3.

12. Procédé de préparation des dispersions aqueuses de polyuréthane selon les revendications 1 à 11, comprenant les étapes de ;
a. mélange d'un ou plusieurs composés polymériques **ICP** ayant au moins deux groupes réactifs avec les isocyanates avec un ou plusieurs monomères **ICM** ayant au moins deux groupes réactifs avec les isocyanates en présence d'un ou plusieurs monomères **ICMA** réactifs avec les isocyanates ayant au moins deux groupes réactifs avec les isocyanates et un groupe de type acide ou un groupe capable de former un acide lorsqu'il est mis en contact avec l'eau, et chauffage du mélange jusqu'à une température d'au moins 60 °C pendant au moins 10 minutes sous agitation ;
b. ajout en continu d'une quantité substœchiométrique d'un ou de plusieurs isocyanates multifonctionnels **I** au mélange de l'étape a), pendant une durée de dix minutes à quatre-vingts minutes tout en maintenant la température dans une plage de 60 °C à 150 °C, pour former un prépolymère de polyuréthane à fonction hydroxyle ;
c. maintien du produit de réaction de l'étape b) à une température comprise entre 120 et 135 °C pendant une durée de 30 à 90 minutes, et subséquemment refroidissement jusqu'à une température comprise entre 60 et 100 °C ;
d. ajout, en une seule fois, d'une quantité supplémentaire d'un ou de plusieurs isocyanates multifonctionnels **I,** en excès stœchiométrique, éventuellement en présence d'un ou de plusieurs composés **ICM** et **ICMA,** au prépolymère de polyuréthane à fonction hydroxyle de l'étape c), sous agitation à une température de 60 °C à 130 °C, et en poursuivant la réaction à une température allant de 70 à 150 °C pendant au moins une heure, pour former un prépolymère de polyuréthane à fonction isocyanate **A1** ayant un indice d'isocyanate correspondant à l'indice théorique ;
e. ajout, en une seule fois, d'un mélange du composé **A2,** et éventuellement d'une ou plusieurs amines primaires **A22** et éventuellement d'eau, au prépolymère de polyuréthane à fonction isocyanate **A1** de l'étape d) se trouvant à une température comprise entre 70 et 95 °C, et homogénéisation pendant au moins 10 minutes à la température résultante, pour convertir le prépolymère de polyuréthane à fonction isocyanate **A1** en un polyuréthane comportant des groupes carbonyle terminaux ;
f. ajout, en une seule fois, d'un ou plusieurs agents de neutralisation **N,** dans de l'eau, au polyuréthane de l'étape e) comprenant des groupes de type acide et des groupes carbonyle, et homogénéisation pendant au moins 10 minutes, pour convertir les groupes de type acide en sel correspondant, ce qui donne le polyuréthane **A** comprenant des groupes sel d'acide pendants et des groupes carbonyle terminaux ;
g. ajout en continu d'eau désionisée préchauffée à une température comprise entre 50 et 70 °C au polyuréthane **A** de l'étape f), tout en agitant vigoureusement pendant au moins 10 minutes et homogénéisation pendant encore au moins 20 minutes à une température comprise entre 50 et 70 °C, pour former une dispersion aqueuse de polyuréthane **A** ;
h. refroidissement de la dispersion aqueuse de polyuréthane **A** de l'étape g) jusqu'à une température inférieure à 40 °C et éventuellement ajout du composé multifonctionnel **B** ;
i. ajout d'eau désionisée à la dispersion aqueuse de l'étape h) comprenant un polyuréthane **A** et éventuellement un composé multifonctionnel **B,** pour ajuster la teneur en solides à 40 +/-1 % en poids.

13. Procédé selon la revendication 12, dans lequel le bloc de construction à fonction carbonyle **A2,** ajouté à l'étape e), est préparé par :
- chauffage de **A21** sous azote, à une température comprise entre 50 et 80 °C, jusqu'à fusion complète ;
- ajout d'un excès molaire de 1 à 45 % de **A22,** en une seule fois ; et
- chauffage du mélange de **A21** et **A22** jusqu'à une température comprise entre 60 et 85 °C pendant une durée comprise entre 1 et 24 heures, jusqu'à conversion complète de la liaison éthyléniquement insaturée, comme confirmé par spectroscopie infrarouge à transformation de Fourier.

14. Procédé selon la revendication 12 ou 13, dans lequel le ou les agents de neutralisation **N,** ajoutés à l'étape f), sont choisis dans le groupe constitué par les amines primaires, secondaires et tertiaires et les bases d'Arrhénius fortes telles que les hydroxydes de métaux alcalins et de métaux alcalino-terreux alcalins.

15. Composition de revêtement comprenant la dispersion aqueuse de polyuréthane selon l'une quelconque des revendications 1 à 11 et un ou plusieurs additifs choisis dans le groupe constitué par les solvants organiques, les antimousses, les agents de coalescence, les modificateurs d'écoulement, les additifs rhéologiques, les charges, les pigments, les pigments actifs, les colorants, les agents mouillants, les émulsifiants, les tensioactifs, les épaississants, les stabilisants thermiques, les agents nivelants, les agents anti-cratères, les inhibiteurs de sédimentation, les absorbeurs d'UV et les antioxydants.

16. Composition de revêtement selon la revendication 15 fournissant une réaction d'autoréticulation par formation d'azométhine pendant et/ou après la formation d'un film.

17. Utilisation de la composition de revêtement selon la revendication 15 ou 16, pour revêtir un substrat choisi dans le groupe constitué par le bois, le bois d'ingénierie, le métal, le verre, le tissu, les composites, le béton, la céramique, le cuir, le papier, les matières plastiques et la mousse.
